# EUROPÄISCHE PATENTSCHRIFT

(11) **EP 2 479 453 B1**
(45) Veröffentlichungstag und Bekanntmachung des Hinweises auf die Patenterteilung: **30.10.2019**
(21) Anmeldenummer: 12000422.1
(22) Anmeldetag: 24.01.2012
(51) Int. Cl.: F16F 9/18, F16F 9/53

(54) **Stossdämpfer für ein Fahrrad**
Shock absorber for a bicycle
Pare-chocs pour un vélo

(30) Priorität: 25.01.2011 DE 102011009406
(43) Veröffentlichungstag der Anmeldung: 25.07.2012
(73) Patentinhaber: DT Swiss AG, 2504 Biel (CH)
(72) Erfinder: Battlogg, Stefan, 6771 St.Anton i.M. (AT); Pösel, Jürgen, 6700 Bludenz (AT); Elsensohn, Gernot, 6771 St. Anton i.M. (AT); Walthert, Martin, 3270 Aaberg (AT)
(74) Vertreter: BSB Patentanwälte Schütte & Engelen Partnerschaft mbB

(56) Entgegenhaltungen:
- JP-A- H0 617 871
- JP-A- 2005 054 846
- US-A- 4 790 522

## Beschreibung

Die vorliegende Erfindung betrifft einen Stoßdämpfer für ein wenigstens teilweise muskelbetriebenes Fahrzeug und insbesondere ein Fahrrad. Das Fahrrad kann mit einem Hilfsantrieb und insbesondere einem elektrischen Hilfsantrieb ausgerüstet sein.

Die US 4 790 522 A offenbart ein Stoßdämpfer für Kraftfahrzeuge, mit zwei separaten Fluidkreisläufen, wobei in einem der beiden Fluidkreisläufe ein rheologisches Fluid eingesetzt wird.

Die JP H06 17871 A zeigt einen Stoßdämpfer mit einer Kolbenstange, die mit einem Kolben verbunden ist. In der Kolbenstange sind mehrere konzentrische Dämpfungskanäle angeordnet.

Die JP 2005 54846 A offenbart einen Stoßdämpfer mit einer Kolbenstange und einem Kolben. Ein magnetorheologisches Dämpfungsventil ist außerhalb des Kolbens und der Kolbenstange angeordnet.

Im Stand der Technik sind verschiedenste Hinterraddämpfer und Federgabeln für Fahrräder bekannt geworden. Typischerweise umfasst ein Stoßdämpfer eine Federeinheit, um auftretende Stöße abzufedern und eine Dämpfungseinheit, um die Federschwingung zu dämpfen. Bei Hinterradstoßdämpfern werden die Federeinheit und die Dämpfungseinheit in der Regel als integrale Einheit ausgebildet. Bei Federgabeln können die Dämpfungseinheit und die Federeinheit auch separat angeordnet werden.

Dämpfer für Fahrräder werden zumeist mit Öl als Dämpfungsfluid betrieben. Zur Dämpfung wird das Dämpfungsfluid von einer ersten Dämpfungskammer über eine Blende gedrosselt zu einer zweiten Dämpfungskammer geleitet. Die Größe der Öffnung der Blende bestimmt die Stärke der Dämpfung. Die optimale Dämpfung hängt von verschiedenen Faktoren ab, wie beispielsweise dem Gewicht des Fahrers und insbesondere den Eigenschaften des Geländes. Es ist wünschenswert, die Stärke der Dämpfung lastabhängig einzustellen, sodass kleine Stöße weniger stark gedämpft werden als starke Stöße. Bei Fahrten über eine Straße, über einen Waldweg oder direkt durch das Gelände sind deshalb unterschiedliche Dämpfungseinstellungen optimal.

Zur Einstellung und Beeinflussung der Dämpfung sind magnetorheologische und elektrorheologische Fluide bekannt geworden, deren Eigenschaften durch Anlegen eines entsprechenden magnetischen oder elektrischen Feldes beeinflusst werden können. Die in dieser Anmeldung beschriebenen Ausführungsbeispiele eines Dämpfers mit magnetorheologischem Fluid können dementsprechend auch mit elektrorheologischem Fluid aufgebaut werden.

Magnetorheologische Fluide bestehen meistens aus einer Suspension von kleinen, magnetisch polarisierbaren Partikeln, welche in einer Trägerflüssigkeit wie einem Öl fein verteilt sind. Die meist aus Carbonyleisenpulver bestehenden polarisierbaren Partikel weisen typischerweise Durchmesser zwischen etwa 0,1 und 50 Mikrometern auf und bilden unter Einfluss eines magnetischen Feldes kettenartige Strukturen, sodass die Viskosität des magnetorheologischen Fluids unter Einfluss des Magnetfelds insbesondere senkrecht zu den Feldlinien des Magnetfeldes erheblich zunimmt.

Bei Abschaltung des Magnetfelds nimmt die Viskosität nahezu schlagartig wieder ab. Untersuchungen haben gezeigt, dass die typische Reaktionszeit im Bereich weniger Millisekunden oder sogar darunter liegt. Somit eignen sich magnetorheologische Fluide zum Einsatz an Dämpfern von Fahrrädern.

Ein generelles Problem bei der Konstruktion von Dämpfern liegt in der Vielzahl unterschiedlicher Anforderungen, die an solche Stoßdämpfer gestellt werden. Stoßdämpfer für Fahrräder sollen flexibel steuerbar sein. Sie sollen weiterhin kompakt und einfach konstruiert und insbesondere auch leicht sein.

Insbesondere die Konstruktion von Stoßdämpfern an Hinterrädern unterliegt aufgrund der oftmals standardisierten und relativ engen Einbaubedingungen hohen Anforderungen. So müssen solche Stoßdämpfer für Hinterräder bei geringen Außenabmessungen einen definierten Hub aufweisen. Dabei unterliegt die Konstruktion sowohl bezüglich der Länge als auch bezüglich des Durchmessers engen Grenzen, um den Einbau in Fahrrädern gewährleisten zu können.

Ein besonders wichtiges Kriterium ist das Gewicht eines solchen Stoßdämpfers, da es im sportlichen Bereich und im Wettkampfbereich, sowie im professionellen Bereich schon durch eine relativ geringe Gewichtsreduktion zu bedeutenden Vorteilen kommen kann.

Mit der US 6,471,018 B1 ist ein magnetorheologischer Stoßdämpfer bekannt geworden, bei dem eine erste Dämpferkammer und eine zweite Dämpferkammer durch einen Dämpferkolben getrennt sind. In dem Dämpferkolben ist eine Strömungspassage zwischen der ersten und der zweiten Dämpferkammer vorgesehen, die durch einen Elektromagneten mit einem Magnetfeld beaufschlagbar ist, um die gewünschte Dämpfung einzustellen. Ein Vorteil eines solchen Dämpfers ist, dass die Verkettung der magnetorheologischen Partikel jederzeit flexibel über die Stärke des Magnetfeldes des Elektromagneten gesteuert werden kann. Nachteilig ist allerdings, dass der sich über die gesamte Länge des Dämpfungszylinders erstreckende Elektromagnet aufgrund der erheblichen Länge und der erforderlichen Anzahl an Windungen ein relativ hohes Gewicht aufweist, sodass ein solcher Stoßdämpfer schwer wird.

Mit der DE 698 29 686 T2 ist ein Stoßdämpfer bekannt geworden, der ebenfalls mittels eines magnetorheologischen Fluids gedämpft wird. Dabei ist die elektrische Spule zur Erzeugung des Magnetfeldes in dem Kolben der Dämpfereinheit angeordnet. Durch den Spalt zwischen der Außenwand des Kolbens und dem Dämpfergehäuse kann das magnetorheologischen Fluid von der einen in die andere Dämpferkammer übertreten. Durch eine entsprechende Beaufschlagung des Spaltes mit einem Magnetfeld kann der Durchfluss des magnetorheologischen Fluids durch den Spalt entsprechend beeinflusst werden. Das durch die Spule erzeugte Magnetfeld tritt durch den Spalt durch und wird durch das Dämpfergehäuse geschlossen. Deshalb muss das Dämpfergehäuse aus einem magnetisch leitenden Material gefertigt sein, was das Gewicht des Dämpfers erheblich erhöht, da das Dämpfergehäuse über seiner vollständigen Länge aus einem entsprechenden Werkstoff bestehen muss. Eine Fertigung aus einer Leichtmetalllegierung wie Aluminium oder dergleichen ist nicht möglich.

Mit der DE 698 21 799 T2 ist ein Hinterradstoßdämpfer für Fahrräder bekannt geworden, der über ein magnetorheologisches Fluid gedämpft wird. An einem Ende einer Dämpferkammer wird über eine Bohrung eine Verbindung nach außen zu einem externen Dämpfungsventil zur Verfügung gestellt, das mit einer externen und parallel angeordneten Einheit verbunden ist, in dem die zweite Dämpferkammer untergebracht ist. An dem Dämpfungsventil ist ein Dauermagnet vorgesehen, dessen Position relativ zu dem Durchflussspalt veränderbar ist, um die Stärke des Magnetfeldes in dem Durchflussspalt einzustellen. Nachteilig an einem solchen System ist der komplexe Aufbau, der eine separat und parallel angeordnete Dämpferkammer erfordert, was den konstruktiven und Montageaufwand und das Gewicht des Hinterradstoßdämpfers erhöht.

Weiterhin ist mit der DE 102 40 568 A1 ein Stoßdämpfer für Fahrräder bekannt geworden, bei dem mit einem magnetorheologischen Fluid gefüllte Dämpferkammern über ein magnetorheologisches Ventil verbunden sind. Dabei können die erforderlichen Leitungen zu einem externen Ventil führen oder aber es wird parallel zu dem Dämpfungszylinder ein internes Ventil vorgesehen, welches einen zu den Dämpferkammern parallelen Hohlraum erfordert. An den Enden stehen die beiden Dämpferkammern über Verbindungsleitungen mit dem Hohlraum mit dem internen Ventil in Verbindung. Ein solcher Stoßdämpfer mit einem externen Ventil weist einen komplizierten Aufbau auf und bei Verwendung eines internen Ventils wird durch den parallelen Hohlraum ein hohes Gewicht erzielt.

Vor dem angeführten Stand der Technik ist es deshalb die Aufgabe der vorliegenden Erfindung einen Stoßdämpfer für ein wenigstens teilweise muskelgetriebenes Fahrzeug und insbesondere ein Fahrrad zur Verfügung zu stellen, welcher flexibel steuerbar ist, einen kompakten Aufbau aufweist und ein leichtes Gewicht ermöglicht, ohne dabei die Funktionalität wie den Hub oder den einstellbaren Kraftbereich einzuschränken.

Diese Aufgabe wird gelöst durch einen Stoßdämpfer mit den Merkmalen des Anspruchs 1. Bevorzugte Weiterbildungen sind Gegenstand der Unteransprüche. Weitere Vorteile und Merkmale der Erfindung ergeben sich aus der allgemeinen Beschreibung und der Beschreibung des Ausführungsbeispiels.

Ein erfindungsgemäßer Stoßdampfer für ein wenigstens teilweise muskelbetriebenes Fahrzeug und insbesondere ein Fahrrad umfasst wenigstens eine Dämpfereinrichtung, die ein Dämpfergehäuse aufweist. In dem Dämpfergehäuse sind eine erste und eine zweite Dämpferkammer vorgesehen, die über wenigstens einen Dämpferkolben voneinander getrennt sind. Eine mit dem Dämpferkolben verbundene Kolbenstange erstreckt sich von dem Dämpferkolben aus wenigstens durch die zweite Dämpferkammer hindurch aus dem Dämpfergehäuse hinaus. Dabei steht die erste Dämpferkammer mit der zweiten Dämpferkammer über wenigstens einen Strömungskanal in Verbindung, der durch die Kolbenstange in wenigstens einer Stellung des Dämpferkolbens aus dem Dämpfergehäuse heraus zu wenigstens einer Drosseleinrichtung führt. Der Strömungskanal umfasst an der Drosseleinrichtung wenigstens einen mit einem feldempfindlichen rheologischen Fluid versehenen Dämpfungskanal, der mit wenigstens einer an der Drosseleinrichtung angeordneten Felderzeugungseinrichtung einem Feld bestimmter Stärke aussetzbar ist, um einen Durchfluss des feldempfindlichen rheologischen Fluids durch die Drosseleinrichtung zu beeinflussen. Ein maximaler Strömungsquerschnitt in der Druckstufe und ein maximaler Strömungsquerschnitt in der Zugstufe sind unterschiedlich.

Der erfindungsgemäße Stoßdämpfer hat viele Vorteile. Ein erheblicher Vorteil des erfindungsgemäßen Stoßdämpfers ist der mögliche einfache und kompakte Aufbau. Dadurch, dass die Drosseleinrichtung als Strömungsventil außerhalb der Dämpfungskammern und außerhalb des Dämpfergehäuses angeordnet ist, kann ein kompakter und leichter Aufbau des gesamten Stoßdämpfers erzielt werden, da die Strömungsverbindung durch die Kolbenstange hergestellt wird. Außerdem ist eine gute Wärmeabfuhr möglich.

Durch den Einsatz eines feldempfindlichen rheologischen Fluides ist der erfindungsgemäße Stoßdämpfer flexibel steuerbar und kann jederzeit jeweils auf die aktuellen Bedingungen eingestellt werden. Aufgrund der hohen Geschwindigkeit der Reaktion solcher feldempfindlicher rheologischer Fluide kann eine Echtzeitsteuerung des Dämpfungsverhaltens eines solchen Stoßdämpfers realisiert werden.

Da die Strömungsverbindung der beiden Dämpferkammern durch die Kolbenstange realisiert wird, kann praktisch ein konventioneller Aufbau gewählt werden. Das ist ein großer Vorteil für die Kompatibilität mit Fahrrädern auf dem Markt, sodass ein breiterer Einsatz und auch eine Nachrüstung möglich ist. Der Dämpferkolben kann gegebenenfalls in axialer Richtung als dünnwandiger Kolben ausgebildet werden, sodass zusätzlich nach Gewicht eingespart werden kann.

Vorteilhaft an der Anordnung eines Strömungsventils außerhalb der Dämpferkammern ist, dass der zur Verfügung stehende Raum größer ist. Wird hingegen ein Strömungsventil bzw. eine z.B. magnetorheologische Strömungsdrossel im Dämpferkolben platziert, so können nur relativ kleine Strömungsquerschnitte in dem Dämpfungskanal realisiert werden. Dadurch treten hohe Strömungsgeschwindigkeiten auf. Die Verweilzeit von z.B. magnetorheolgischen Partikeln muss auch bei den größten in dem Dämpfungskanal auftretenden Fließgeschwindigkeiten um ein bestimmtes Maß größer als die Reaktionszeit sein, da sonst die Effizienz und Steuerbarkeit der Drosseleinrichtung stark abnehmen. Auch wenn beispielsweise magnetorheologische Fluide innerhalb von Millisekunden auf ein angelegtes Feld reagieren, ist bei den hohen Durchflussgeschwindigkeiten eine entsprechende große Länge des Dämpfungskanals erforderlich, damit der gewünschte Dämpfungseffekt sicher erzielt wird. Deshalb müssen Dämpferkolben relativ lang ausgebildet werden, wenn die Dämpfung in einem Dämpfungskanal durch den Kolben bewirkt werden soll, damit der gewünschte Dämpfungseffekt in allen Fällen gewährleistet werden kann. Die vorliegende Erfindung platziert den Dämpfungskanal bzw. das Dämpfungsventil außerhalb der Dämpferkammern, sodass größere Querschnittsflächen und somit kleinere Fließgeschwindigkeiten möglich sind. Der Durchmesser und die Länge des Dämpferkolbens spielen keine Rolle.

Insbesondere wenn innerhalb eines definierten Bauraums ein bestimmter Hub des Dämpfers gefordert ist, kann der Dämpfungskanal im Kolben nicht beliebig lang sein.

Ein weiterer wesentlicher Vorteil der vorliegenden Erfindung ist, dass außerhalb des Dämpferkolbens bzw. der Dämpferkammern der Gestaltungsspielraum größer ist, um die Drosseleinrichtung zu konstruieren. Die Drosseleinrichtung kann strömungstechnisch und elektromagnetisch hinsichtlich der Anwendung optimiert werden. Das muss nicht zwangsläufig mehr Bauraum oder Gewicht bedeuten, entscheidend ist oft die Form des Bauraums. Ist beispielsweise in einer bestimmten Anwendung ein sehr langer dünner Dämpfungskanal vorteilhaft, dann kann er vergleichsweise einfach außerhalb des Dämpfergehäuses in einer dementsprechend geformten Drosseleinrichtung umgesetzt werden.

In allen Ausgestaltungen kann sich zumindest ein Teil der Drosseleinrichtung wenigstens teilweise in der Kolbenstange befinden. Dadurch kann sich abhängig von der Position des Dämpferkolbens im Dämpfer auch zumindest ein Teil der Drosseleinrichtung innerhalb des Dämpfergehäuses befinden. Wesentlich ist, dass sich in mindestens einer bestimmten Dämpferposition die Drosseleinrichtung außerhalb des Dämpfergehäuses befindet.

Ein weiterer erheblicher Vorteil der Erfindung liegt in der erheblichen einfacheren Wärmeabfuhr. Die bei der Drosselung des Dämpfungsmediums entstehende Abwärme wird nicht innerhalb der Dämpfungskammern oder im Dämpferkolben produziert, sondern außerhalb der Dämpferkammern, sodass die Abwärme konstruktiv einfach und sehr effektiv an die Umgebung abgegeben werden kann. Eine Überhitzung kann selbst bei starker Belastung und hochsommerlichen Temperaturen vermieden werden. Der Einsatz aufwendiger Kühlsysteme oder von Heatpipes zur Wärmeabfuhr kann vermieden werden.

Ein weiterer Vorteil ist, dass beim dem erfindungsgemäßen Aufbau der Aufbau der Dämpfungskammer und des Dämpferkolbens an die Anwendung angepasst werden kann. Der Dämpferkolben kann so ausgelegt werden, dass eine bestimmte Kraft einen bestimmten Druck erzeugt. Er muss nicht mehr über einen Mindestdurchmesser oder eine Mindestlänge verfügen, um die Drosseleinrichtung aufnehmen zu können.

Dadurch kann auch der sich selbst verstärkende Prozess entschärft werden, bei dem bei Anordnung der Drosseleinrichtung im Dämpferkolben der Kolbendurchmesser zunächst wächst, um die Drosseleinrichtung aufzunehmen. Bei konstanter Dämpferkennlinie müssen infolgedessen die Strömungskanäle und somit auch die Drosseleinrichtung größer werden, was aber wiederum einen größeren Dämpferkolben bedingen würde. Nachteilig an einem solchen Aufbau ist, dass vom Kolbendurchmesser viele andere Maße abhängen und ein etwas größerer Dämpferkolben einen deutlichen Zuwachs bei Bauraum und Gewicht verursachen kann. Solche Nachteile werden mit der Erfindung vermieden.

In besonders bevorzugten Ausgestaltungen umfasst der Stoßdämpfer wenigstens eine Federeinrichtung, die insbesondere eine erste und wenigstens eine zweite mit einem kompressiblen Medium versehene Federkammer umfasst. In bevorzugten Ausgestaltungen ist die Federeinrichtung als Gasfeder ausgeführt, wobei dann in der ersten und der zweiten Federkammer vorzugsweise im Wesentlichen Luft als kompressibles Medium vorgesehen ist. Möglich ist aber auch der Einsatz anderer kompressibler Medien, die reversibel oder wenigstens im Wesentlichen reversibel auf Druckbelastungen reagieren.

Besonders bevorzugt taucht das Dämpfergehäuse bei einer Einfederung in die Federeinrichtung ein. Vorzugsweise umgibt wenigstens die erste Federkammer die zweite Dämpferkammer wenigstens teilweise radial. Bei einem Einfedervorgang kann beispielsweise auch die erste Federkammer die erste Dämpferkammer wenigstens teilweise radial umgeben. Bei einem Ausfedervorgang taucht das Dämpfergehäuse dementsprechend wenigstens teilweise wieder aus der Federeinrichtung aus.

In allen Ausgestaltungen ist es bevorzugt, dass der mit einem ersten Ende und einem zweiten Ende versehene Stoßdämpfer vorzugsweise am ersten Ende einen ersten Krafteinleitungsabschnitt bzw. Anschluss und an dem zweiten Ende einen zweiten Krafteinleitungsabschnitt bzw. Anschluss aufweist. Vorzugsweise ist die Dämpfereinrichtung näher an dem ersten Ende und die Federeinrichtung näher an dem zweiten Ende des Stoßdämpfers angeordnet.

In allen Ausgestaltungen schließt sich vorzugsweise die zweite Federkammer an die zweite Dämpferkammer an. Insbesondere grenzt die zweite Federkammer direkt an die zweite Dämpferkammer an. Die erste und die zweite Federkammer sind vorzugsweise durch einen Federungskolben getrennt, der mit dem Dämpfergehäuse verbunden ist.

Vorzugsweise weist die Drosseleinrichtung einen sich über einen Teil oder den gesamten Umfang der Drosseleinrichtung erstreckenden Dämpfungskanal. Bevorzugt ist es auch, dass mehrere über den Umfang verteilt angeordnete Dämpfungskanäle vorgesehen sind. Einzelne oder alle Dämpfungskanäle sind insbesondere jeweils als schmaler Dämpfungsspalt ausgebildet. Die Höhe des Dämpfungskanals in Richtung der Feldlinien in vorzugsweise erheblich kleiner als die Breite des Dämpfungskanals quer zur Strömungsrichtung und quer um Feld.

In allen Ausgestaltungen ist es besonders bevorzugt, dass eine Länge der Dämpfungskanäle quer zur Strömungsrichtung größer ist, als ein Umfang des Dämpferkolbens. Eine solche Ausgestaltung ist besonders vorteilhaft, da dadurch die Strömungsgeschwindigkeit in den Dämpfungskanälen bei gleicher Spaltenbreite reduziert wird. Dadurch kann eine Ausdehnung der Dämpfungskanäle im Strömungsrichtung verringert werden. Durch die reduzierten Strömungsgeschwindigkeiten liegt eine größere Verweilzeit der Partikel des feldempfindlichen Fluids in den Dämpfungskanälen vor. Somit kann die Ausdehnung der Drosseleinrichtung reduziert werden.

Wenn die Dämpfungskanäle in axialer Richtung des Stoßdämpfers ausgerichtet sind und sich an die zweite Federkammer in axialer Richtung anschließen, kann die gesamte Baulänge des Stoßdämpfers reduziert werden bzw. bei gleicher Baulänge der Hub vergrößert werden. Wird hingegen der Dämpfungskanal in dem Dämpferkolben vorgesehen, so muss die Ausdehnung des Dämpferkolbens in axialer Richtung entsprechend größer gewählt werden, um bei den dort auftretenden höheren Strömungsgeschwindigkeiten die nötige Verweilzeit zu gewährleisten. Die erfindungsgemäße Strömungsverbindung durch die Kolbenstange zu einer außerhalb der Dämpferkammern angeordneten Drosseleinrichtung ermöglicht eine kürzere axiale Länge des Stoßdämpfers und kann zur Gewichtsreduktion beitragen.

Vorzugsweise schließt sich die Drosseleinrichtung in axialer Richtung an die zweite Federkammer an. Die zweite Federkammer weist vorzugsweise den gleichen Innendurchmesser auf wie die erste Federkammer, da beide in einem Federgehäuse angeordnet sind, in dem der Federkolben auf der Innenseite des Federgehäuses verschiebbar angeordnet ist. Das bedeutet, dass der radiale Durchmesser der zweiten Federkammer größer ist als der radiale Durchmesser der Dämpferkammern. Dadurch kann der Dämpfungskanal in Strömungsrichtung eine vergrößerte Querschnittsfläche aufweisen, wodurch eine geringere Strömungsgeschwindigkeit erzielbar ist, als wenn der Dämpfungskanal im Dämpferkolben angeordnet ist.

Außerdem ist es gegebenenfalls möglich den Außendurchmesser der Drosseleinrichtung gegenüber dem Außendurchmesser der Federeinrichtung nochmals zu vergrößern, sodass noch mehr Fläche für einen Dämpfungskanal in axialer Richtung zur Verfügung steht. Insgesamt wird eine geringere Strömungsgeschwindigkeit ermöglicht, wodurch eine geringere axiale Länge realisierbar ist.

Die Höhe des Dämpfungskanals bzw. des Dämpfungsspaltes in Richtung der Feldlinien wird bei Einsatz magnetischer Felder gering gehalten, um den magnetischen Widerstand relativ gering zu halten. Vorzugsweise kann der Dämpfungspalt in Feldrichtung durch eine Zwischenwand aus feldleitendem Material segmentiert werden. Das für die Dämpfung erforderliche Magnetfeld kann so noch einfacher erzeugt werden und der Energiebedarf der Spule kann sehr klein sein.

Vorteilhaft für den Bauraum und das Gewicht ist, wenn die vom Magnetfeld durchflutete Querschnittsfläche klein ist, da dann der gesamte magnetische Kreis klein und leicht ist. Das kann erreicht werden, wenn anstelle eines einzelnen Kanals mehrere kleinere Kanäle eingesetzt werden, welche sich in demselben Magnetkreis befinden. Besonders vorteilhaft werden diese Kanäle direkt aufeinander gestapelt. Solch eine fächerartige Struktur verstärkt den Effekt, wenn wenigstens eine quer zum Feld und parallel zur Strömung liegende Trennwand vorgesehen ist, die besonders bevorzugt aus einem ferromagnetischen Material hergestellt ist. Dadurch werden in Feldrichtung zwei oder mehr Teilkanäle angeordnet.

In allen Ausgestaltungen ist es möglich, dass an der Drosseleinrichtung wenigstens ein Strömungskanal über wenigstens ein Trennelement in wenigstens zwei oder auch mehr insbesondere quer zum Feld angeordnete Dämpfungskanäle aufgeteilt ist. Ein Trennelement kann das Strömen in Bereichen des Kanals verhindern, in denen das Feld weniger stark oder gar nicht ausgeprägt ist. Zudem kann ein Trennelement Kanalbereiche mit verschiedenen Funktionen voneinander separieren, beispielsweise um gewisse Kanalbereiche in eine Strömungsrichtung sperren zu können. Dabei ist es möglich, dass ein Trennelement als separates Teil ausgebildet ist und beispielsweise aus einem Kunststoff oder einem Leichtmetall oder dergleichen besteht.

Insbesondere beim Einsatz von magnetorheologischen Fluiden ist es bevorzugt, dass das Trennelement aus einem nichtmagnetischen Material bzw. einem magnetischen Isolator besteht. Beispielsweise ist es möglich, dass sich der Dämpfungskanal bzw. die Dämpfungskanäle über den gesamten Umfang der Drosseleinrichtung erstrecken. Dann kann eine Aufteilung des Umfangskanals über die Trennelemente in einzelne Dämpfungskanäle erfolgen, die sich jeweils z.B. über einen Winkelabschnitt erstrecken. Ein Vorteil einer solchen Anordnung ist, dass die Trennelemente nicht nur die Strömungskanäle untereinander teilen, sondern auch zu einer zentrierten und definierten Anordnung innerhalb der Drosseleinrichtung führen.

In bevorzugten Ausgestaltungen ist wenigstens ein Dämpfungskanal wenigstens teilweise einem sich in radialer Richtung erstreckenden Feld einer Felderzeugungseinrichtung aussetzbar. Insbesondere erstreckt sich ein Abschnitt oder der gesamte Dämpfungskanal wenigstens teilweise in axialer Richtung.

Es ist auch möglich und bevorzugt, dass wenigstens ein Dämpfungskanal bzw. ein Abschnitt eines Dämpfungskanals einem sich in axialer Richtung erstreckenden Feld der Felderzeugungseinrichtung aussetzbar ist. Beispielsweise ist es möglich, dass das am Ende aus der Kolbenstange austretende feldempfindliche Fluid in radialer Richtung umgelenkt wird und während dieser radialen Strömung einem sich in axialer Richtung erstreckenden Feld der Felderzeugungseinrichtung ausgesetzt wird. Dabei kann sich ein stern- oder scheibenförmiger Spalt ergeben, in welchem das feldempfindliche Fluid von radial innen nach radial außen oder anders herum geleitet wird.

Möglich ist es auch, dass sich wenigstens ein Abschnitt des Dämpfungskanals in radialer Richtung und dass sich wenigstens ein Abschnitt des Dämpfungskanals in axialer Richtung erstrecken und dort jeweils einem entsprechend quer dazu verlaufenden Feld ausgesetzt werden.

Der Dämpfungskanal kann außerhalb der Dämpferkammern praktisch beliebig geformt bzw. angeordnet werden. Der Dämpfungskanal kann dabei z.B. spiralförmig, konzentrisch oder exzentrisch kreisförmig oder elliptisch um die Kolbenstange gebogen werden.

In besonders bevorzugten Ausgestaltungen weist die Kolbenstange wenigstens zwei Durchflusskanäle auf. Möglich wird dies z.B. über eine doppelwandige Gestaltung der Kolbenstange. Dann kann z.B. der innere Durchflusskanal von der ersten Dämpfungskammer zu der Drosseleinrichtung führen und der äußere Durchflusskanal von der Drosseleinrichtung zu der zweiten Dämpfungskammer.

Möglich ist es aber auch, dass sich die Kolbenstange durch beide Dämpferkammern hindurch jeweils nach außen erstreckt, sodass eine äußere Rückführung möglich ist.

In bevorzugten Ausgestaltungen ist es möglich, dass wenigstens ein Strömungsventil in dem Dämpferkolben vorgesehen ist. Insbesondere ist ein solches Strömungsventil ein mechanisches Strömungsventil, welches beispielsweise als Einwegventil ausgebildet ist. Dadurch wird es möglich, dass beispielsweise der Einfedervorgang über die Drosseleinrichtung gesteuert wird, während der Ausfedervorgang und die entsprechende Strömung von der zweiten Dämpferkammer zu der ersten Dämpferkammer über wenigstens ein im Dämpferkolben vorgesehenes Strömungsventil gesteuert wird. Ein solches Strömungsventil kann z. B. als federvorbelastetes mechanisches Strömungsventil ausgebildet sein, welches sich in einer Strömungsrichtung automatisch schließt und in der anderen Strömungsrichtung ab einem gewissen Druckunterschied öffnet. Gegebenenfalls kann die Höhe des Druckunterschiedes einstellbar sein.

Die Drosseleinrichtung kann aus mehreren unabhängigen Dämpfungskanälen mit jeweils einer beliebigen Anzahl von Felderzeugungseinheiten bestehen. Dabei kann wenigstens ein zusätzliches Ventil abhängig von der Strömungsrichtung, vom Druck, dem Betriebszustand oder sonstigen Parametern den Durchfluss durch die verschiedenen Dämpfungskanäle steuern.

Eine einfache Ausführung sieht beispielsweise zwei unabhängige Dämpfungskanäle vor, die durch ein einfaches mechanisches Ventil je nach Strömungsrichtung gesperrt oder angesteuert werden. Dadurch lassen sich unterschiedliche Eigenschaften je nach Bewegungsrichtung sehr einfach umsetzen, beispielsweise als Druck- und Zugstufe. Durch diese Anpassung kann sehr viel Energie gespart werden, da die jeweilige Abweichung von der stromlosen Grundkurve des Dämpfers kleiner gemacht werden kann. Damit können unterschiedlichen Kennlinien der Dämpfereinrichtung für die Druck- und die Zugstufe realisiert werden.

Möglich ist es beispielsweise, dass Gruppen von Dämpfungskanälen gebildet werden, wobei z.B. alle Dämpfungskanäle in der Druckstufe (bzw. Zugstufe) wirken, während einige in der Zugstufe (bzw. Druckstufe) durch Einwegventile blockiert werden.

Möglich ist es auch, dass Shim-Ventile für die Druckstufe bzw. Zugstufe in Reihe zu dem wenigstens einen Dämpfungskanal vorgesehen sind, die in der Druckstufe bzw. Zugstufe den maximalen Strömungsquerschnitt drosseln.

In bevorzugten Weiterbildungen umfasst die Felderzeugungseinrichtung wenigstens eine und insbesondere wenigstens zwei Felderzeugungseinheiten.

Es ist auch möglich, dass mehr als 2 Felderzeugungseinheiten vorgesehen sind. Beispielsweise kann für jeden Dämpfungskanal eine separate Felderzeugungseinheit vorgesehen sein. Möglich ist es auch, dass für jeden Dämpfungskanal zwei oder mehr Felderzeugungseinheiten vorgesehen sind, die in Gruppen oder jeweils einzeln ansteuerbar sind.

Besonders bevorzugt ist wenigstens ein Dämpfungskanal einem inhomogenen Feld aussetzbar. Besonders bevorzugt ist dabei die Inhomogenität des Feldes steuerbar.

Vorteilhafterweise ist der Strömungsquerschnitt des Dämpfungskanals oder aller Dämpfungskanäle derart beeinflussbar, dass wenigstens ein Übergangsabschnitt und wenigstens ein Sperrabschnitt und/oder wenigstens ein Durchlassabschnitt einstellbar ist bzw. sind. Der Querschnitt des Dämpfungskanals wird dabei abhängig von der lokal herrschenden Feldstärke in virtuelle Kanalquerschnitte mit unterschiedlichen Eigenschaften eingeteilt. Dabei wird in einem Sperrabschnitt der Durchfluss praktisch vollständig gesperrt, während der Durchlassabschnitt als Bypass dient und praktisch ungehinderten Durchfluss zulässt. In dem Übergangsabschnitt kann ein inhomogenes Feld wirken, welches für einen entsprechend variablen Strömungswiderstand sorgt. Insbesondere durch den Übergangsabschnitt ist es möglich, einen weichen Übergang des Ansprechverhaltens des Stoßdämpfers zu erzielen. Die Inhomogenität des Feldes ist dabei vorzugsweise derart, dass das Verhältnis von maximaler zu minimaler Feldstärke in dem Übergangsabschnitt vorzugsweise >10 und insbesondere >100 bzw. >1000 beträgt. Das Verhältnis der Feldstärken in dem Sperrabschnitt zu der Feldstärke im Durchlassabschnitt ist dementsprechend auch vorzugsweise >10 und insbesondere >100 und vorzugsweise >1000, 10000 oder 100000, auch Werte >1000000 sind möglich.

In bestimmten Ausgestaltungen ist der Übergangsabschnitt ein Abschnitt, der mit einem an sich relativ homogenen oder sogar sehr homogenen Feld beaufschlagt wird, nur liegt die Feldstärke zwischen der Feldstärke in dem Sperrabschnitt und der Feldstärke in einem Durchlassabschnitt. In einer solchen Ausgestaltung ist vorzugsweise eine Vielzahl von separat mit jeweils einem Feld beaufschlagbaren Dämpfungskanälen oder Bereichen eines gemeinsamen Dämpfungskanals vorgesehen. Dabei kann jeder einzelne Dämpfungskanal mit jeweils einem homogenen Feld beaufschlagt werden. Durch eine hohe oder sogar maximale Feldstärke in verschiedenen Dämpfungskanälen kann wenigstens ein Sperrabschnitt gebildet werden. Ein Dämpfungskanal oder mehrere benachbarte Dämpfungskanäle ohne Feld bilden einen Durchlassabschnitt. Weiterhin kann auch wenigstens ein Dämpfungskanal mit einem mittleren Feld vorgesehen werden, der als Übergangsabschnitt dient.

Möglich ist es bei so einem System auch, dass mehrere mit treppenartig ansteigender bzw. abfallender Feldstärke ausgebildete Dämpfungskanäle einen Übergangscluster bzw. Übergangssegment bilden, in welchem insgesamt ein stark inhomogenes Feld wirkt.

Besonders bevorzugt ist wenigstens ein Anteil des Übergangsabschnittes und/oder des Durchlassabschnittes an der Querschnittsfläche des gesamten Strömungskanals oder wenigstens eines Dämpfungskanals einstellbar. Wenn verschiedene Dämpfungskanäle vorgesehen sind, die jeweils mit einer oder mehreren Felderzeugungseinheiten mit einem entsprechenden Feld beaufschlagt werden, kann auf einfache Art und Weise ein Flächenanteil beispielsweise des Durchlassabschnitts eingestellt werden, in dem die entsprechenden Felderzeugungseinheiten abgeschaltet werden. Die Einstellung eines Anteils des Übergangsabschnitts kann darüber erfolgen, dass mehrere benachbarte Felderzeugungseinheiten derart angesteuert werden, dass sie entsprechend unterschiedliche Feldstärken erzeugen.

Insbesondere sind wenigstens zwei Dämpfungskanäle unterschiedlich starken Feldern verschiedener Felderzeugungseinheiten aussetzbar.

In allen Ausgestaltungen umfasst wenigstens eine Felderzeugungseinrichtung eine Magneteinrichtung oder ist als eine solche ausgebildet. Dazu kann die Felderzeugungseinrichtung einen magnetisch leitenden Ringleiter umfassen, der zur Schließung der Feldlinien nach dem Durchtritt durch den Dämpfungskanal dient. Möglich ist es, dass ein magnetisch leitender Ringleiter wenigstens einen Dämpfungskanal in radialer Richtung vollständig oder doch wenigstens im Wesentlichen vollständig umgibt. Möglich ist es, dass wenigstens eine Magneteinrichtung wenigstens einen Permanentmagneten zur Erzeugung eines statischen Magnetfeldes umfasst. Vorzugsweise umfasst wenigstens eine Felderzeugungseinheit wenigstens eine Spule. Die Spule erzeugt zusammen mit einem Kern ein Magnetfeld, welches ggf. das Magnetfeld des Permanentmagneten verstärkt oder abschwächt, um ein entsprechend moduliertes Magnetfeld in dem Dämpfungskanal einzustellen.

Möglich ist es auch, dass die Felderzeugungseinheit einen Dauermagneten umfasst, dessen Magnetisierung durch wenigstens einen magnetischen Impuls der Spule dauerhaft veränderbar bzw. einstellbar ist. Durch einen kurzen magnetischen Impuls wird die Magnetisierung des Dauermagneten für einen erheblich längeren Zeitraum eingestellt. Dadurch wird für nur einen kurzen Zeitraum Strom für die Spule benötigt, während das magnetische Feld des Dauermagneten anschließend dauerhaft erhalten bleibt. Die Länge des magnetischen Impulses kann z.B. im Bereich von Millisekunden oder z.B. 1 Sekunde betragen, während das magnetische Feld in dem Dauermagneten anschließend minutenlang, tagelang oder sogar jahrelang erhalten bleibt.

Insbesondere ist die dauerhafte Magnetisierung des Dauermagneten durch mindestens einen magnetischen Impuls der Felderzeugungseinheit auf einen beliebigen Wert zwischen 0 und der Remanenz des Dauermagneten einstellbar. Dabei ist insbesondere die Polarität der Magnetisierung veränderbar. Durch ein gezieltes Anlegen eines sich abschwächenden magnetischen Wechselfeldes kann der Dauermagnet auch entmagnetisiert werden.

Bei einer solchen Ausgestaltung kann je nach den derzeitigen Anforderungen die Magnetisierung des Dauermagneten an die aktuellen Bedürfnisse angepasst werden. Das kann während des Betriebes erfolgen, so dass z.B. bei Wechsel von einem Feldweg auf eine Straße oder sogar während der Fahrt auf einem Waldweg die Magnetisierung des Dauermagneten kontinuierlich oder periodisch verändert und angepasst werden kann. Durch die dauerhafte Magnetisierung eines oder mehrerer Dauermagneten kann Energie eingespart werden, da nur für jede Veränderung der Magnetisierung Strom benötigt wird, nicht aber für die ständige Aufrechterhaltung des Magnetfeldes.

Möglich ist es auch, die Magnetisierung des Dauermagneten in mehreren vorbestimmten Stufen zu verändern und die Spule oder eine andere Spule zusätzlich zur Feineinstellung zu verwenden, um das wirkende Magnetfeld definiert anzupassen. Bei einer solchen Betriebsweise wird auch weniger Energie benötigt, da nur zur Feinjustage Energie benötigt wird.

In allen Ausgestaltungen ist es bevorzugt, dass das Dämpfergehäuse und/oder Federgehäuse aus einem unmagnetischen Material wie einer Leichtmetalllegierung oder einem Faserverbundstoff bestehen.

In allen Ausgestaltungen ist es bevorzugt, dass wenigstens eine Steuereinrichtung vorgesehen ist, um die Felderzeugungseinrichtung zu steuern. Insbesondere dient die Steuereinrichtung auch dazu, magnetische Impulse der Felderzeugungseinheit gesteuert auszugeben. Wenigstens ein Sensor kann vorgesehen sein, um Informationen über die Fahrbahn, die Lage, die Geschwindigkeit etc. der Steuereinrichtung zur Verfügung zu stellen.

Der Dämpferkolben kann in allen Ausgestaltungen mit einem oder mehreren Magneten versehen sein, um eine permanente Dichtung zum Dämpfergehäuse zu realisieren. Auf eine aufwendige Dichtung zwischen Dämpferkolben und Dämpfergehäuse kann dann verzichtet werden.

In allen Ausgestaltungen kann ein Dauermagnet der Felderzeugungseinrichtung wenigstens teilweise aus wenigstens einem hartmagnetischen Werkstoff bestehen, der eine bestimmte Remanenz und Koerzitivfeldstärke aufweist. Ein Material mit solchen Eigenschaften kann dauerhaft magnetisiert und auch dauerhaft wieder entmagnetisiert werden. Die Stärke der Magnetisierung hängt von der Stärke des magnetischen Impulses, nicht aber von der Dauer des magnetischen Impulses ab.

Die Impulslänge der magnetischen Impulse ist insbesondere kleiner als 1 Minute, vorzugsweise beträgt die Impulslänge kleiner 10 Sekunden und besonders bevorzugt kleiner 1 Sekunde. Für eine dauerhafte Veränderung und Einstellung der Magnetisierung des Dauermagneten können magnetische Impulse mit einer Impulslänge im Bereich von wenigen Mikrosekunden ausreichen, wobei anschließend die eingestellte Magnetisierung des Dauermagneten dauerhaft zur Verfügung steht, bis mit dem nächsten magnetischen Impuls die Magnetisierung erneut verändert wird. Üblicherweise begrenzt die Einrichtung zur Erzeugung des magnetischen Impulses die minimale Impulsdauer, Zeiten im Bereich von Hundertstel- oder Zehntelsekunden sind ebenso möglich wie wenige Millisekunden oder weniger.

In allen Ausgestaltungen und Weiterbildungen besteht der Dauermagnet insbesondere wenigstens teilweise aus einem solchen Material und ist derart strukturiert, dass in dem Dämpfungskanal eine magnetische Flussdichte von wenigstens 0,3 Tesla und insbesondere von wenigstens 0,5 Tesla erzeugbar ist. Dies bedeutet nicht, dass ständig eine solche Flussdichte eingestellt sein muss, sondern nur, dass bei max. erzeugbarer Feldstärke des Dauermagneten die angeführte magnetische Remanenz in dem Dämpfungskanal erzeugbar sein soll. Insbesondere beträgt die magnetische Remanenz wenigstens 0,5 und insbesondere 0,8 Tesla. Vorteilhafterweise besteht der Dauermagnet wenigstens teilweise aus einem Material, welches eine Koerzitivfeldstärke größer als 1 kA/m (= 1.000 Ampere/Meter) und insbesondere größer als 5 kA/m und vorzugsweise größer als 10 kA/m aufweist. Insbesondere sind auch Koerzitivfeldstärken von 30, 40 oder 50 oder auch 100 oder 150 kA/m möglich.

Besonders bevorzugt besteht der bzw. wenigstens ein Dauermagnet wenigstens teilweise aus einem Material, welches eine Koerzitivfeldstärke kleiner als 1000 kA/m (= 1.000.000 Ampere/Meter) und vorzugsweise kleiner 500 kA/m und besonders bevorzugt kleiner als 200 kA/m aufweist. Die Koerzitivfeldstärke liegt besonders bevorzugt in einem Bereich zwischen 10 kA/m und 200 kA/m.

Bevorzugt besteht der Dauermagnet wenigstens teilweise aus einem Material wie Alnico oder einem Material mit vergleichbaren magnetischen Eigenschaften wie beispielsweise FeCrCo, FeCoVCr oder CuNiFe. Besonders bevorzugt wird Alnico oder ein vergleichbares Material verwendet. Alnico ist eine Legierung aus Aluminium, Nickel und Cobalt und teilweise auch anderen Elementen wie beispielsweise Eisen oder Kupfer. Aus Alnico können Dauermagnete hergestellt werden, die üblicherweise eine Remanenz von 0,7 bis 1,2T und eine Koerzitivfeldstärke von 30 bis 150kA/m oder mehr aufweisen können.

Ein Alnico-Magnet weist relativ hohe Koerzitivfeldstärken auf und setzt äußeren Magnetfeldern dementsprechend einen hohen Widerstand entgegen, sodass eine Ummagnetisierung bzw. Entmagnetisierung im geschlossenen magnetischen Kreis mit normalen in der Natur vorkommenden Feldern nicht erreicht wird. Andererseits ist die Koerzitivfeldstärke im Vergleich z.B. zu Neodym relativ gering, sodass mit einem Elektromagneten bzw. einer elektrischen Spule eine Entmagnetisierung mit relativ geringem Energieaufwand möglich ist.

Vorteilhaft an Alnico sind auch der Verlauf der Entmagnetisierungskurve (2. Quadrant im BH-Diagramm), die hohe Temperaturstabilität und die guten chemischen Eigenschaften relativ zu anderen üblichen Magnetmaterialien.

Befindet sich der Dämpfer im Lockout, dann soll die Kolbenbewegung bei allen Kräften unter einer definierten Lockout-Kraft verhindert werden. Dazu wird die Strömung der magnetorheologischen Flüssigkeit durch ein möglichst homogenes Magnetfeld im Strömungskanal blockiert. In diesem Fall ist die Ausführung des Strömungskanals als flacher Spalt von großem Vorteil.

Im normalen Dämpferbetrieb ist es bevorzugt, dass der Dämpfungskanal einem inhomogenen Magnetfeld aussetzbar ist. Die Inhomogenität des Magnetfeldes über den Dämpfungskanal weist vorzugsweise ein Verhältnis von größter zu kleinster Feldstärke von größer als 10 und insbesondere größer 100 oder sogar 1000 auf. Durch die Inhomogenität kann der Dämpfungskanal quer zu der Richtung des strömenden Mediums anhand der Feldstärke in verschiedene Abschnitte eingeteilt werden. Bereiche mit keinem oder nur sehr geringem Feld werden als Durchlassabschnitte und Bereiche mit starkem Feld als Sperrabschnitte bezeichnet. Dazwischen können Übergangsabschnitte liegen, in denen die Feldstärke von einem tiefen auf einen höheren Wert ansteigt.

Vorzugsweise weist der Strömungskanal wenigstens einen Übergangsabschnitt und wenigstens einen Sperrabschnitt und/oder wenigstens einen Durchlassabschnitt auf. Das Feldstärkeverhältnis im Sperrabschnitt zum Durchlassabschnitt ist insbesondere größer 10 und besonders bevorzugt größer als 100. Das Feldstärkeverhältnis von dem Übergangsabschnitt zum Durchlassabschnitt ist insbesondere größer als 5 und vorzugsweise größer als 10. Die einzelnen Abschnitte können fließend ineinander übergehen. Möglich ist aber auch eine mechanische Trennung der einzelnen Abschnitte voneinander durch z.B. Trennelemente oder Trennwände.

Durch einen Bypass- bzw. Durchlassabschnitt wird ein Nulldurchgang des Kraft-Geschwindigkeitsverlaufs angestrebt, bei dem sich ein ruhender Dämpfungskolben schon bei kleinen oder kleinsten Kräften zu bewegen beginnt und somit auftretende Stöße dämpft. Ein solcher Nulldurchgang des Kraft-Geschwindigkeitsverlaufs kann durch einen Durchlassabschnitt gewährleistet werden.

Bei kleinen Geschwindigkeiten strömt das magnetorheologische Fluid ausschließend durch den Bypass bzw. Durchlassabschnitt. Mit steigender Geschwindigkeit erhöht sich der Druckverlust im Durchlassabschnitt, bis ein kritischer Wert erreicht wird, bei dem die Schubspannung des magnetorheologischen Fluids im Sperrabschnitt des Strömungskanals erreicht und überschritten wird. Ab dieser Druckdifferenz strömt das magnetorheologische Fluid nicht nur in dem Durchlassabschnitt, sondern auch im Sperrabschnitt. Dadurch steigt der Druck bei weiter steigender Geschwindigkeit weniger stark an als zuvor. Systembedingt liegt aber ein Knickpunkt im Steigungsverhalten vor, wenn ab einer festen Druckdifferenz das magnetorheologische Fluid auch den Sperrabschnitt durchströmt. Bei Stoßdämpfern am Fahrrad wird ein sanfter Übergang vom "Low Speed"- in den "High Speed"-Bereich angestrebt, um ein komfortables Fahrverhalten zu ermöglichen. Dazu muss die Knickstelle im Druck-Geschwindigkeitsverlauf entsprechend stark abgerundet werden. Erst dann zeichnet sich ein Dämpfer durch hohen Fahrkomfort und erhöhte Sicherheit durch besseren Fahrbahnkontakt aus.

Das kann hier erzielt werden, indem ein Übergangsabschnitt mit einem inhomogenen Magnetfeld zur Verfügung gestellt wird, wobei mit zunehmender Druckdifferenz ein zunehmender Anteil des Übergangsabschnitts ein Durchströmen des magnetorheologischen Fluids ermöglicht. Mit steigender Geschwindigkeit vergrößert sich durch die zunehmende Druckdifferenz der Durchlassabschnitt zu Lasten des Übergangsabschnittes, die Kurve im Druck-Geschwindigkeitsverlauf flacht also zunehmend ab. Ab einer gewissen Druckdifferenz wird, wie zuvor beschrieben, auch der Sperrabschnitt durchströmt, wobei dieser Übergang fließend ist.

Weitere Vorteile und Eigenschaften der vorliegenden Erfindung ergeben sich aus dem Ausführungsbeispiel, das mit Bezug auf die beiliegenden Figuren im Folgenden beschrieben wird.

In den Figuren zeigen:
- Fig. 1: eine schematische Ansicht eines mit einem erfindungsgemäßen Stoßdämpfer ausgerüsteten Fahrrads;
- Fig. 2: eine schematische Ansicht der Kommunikationsverbindungen des Fahrrads nach Fig. 1;
- Fig. 3: eine stark schematische geschnittene Ansicht eines Stoßdämpfers des Fahrrads nach Fig. 1 mit einer Elektronikeinheit;
- Fig. 4: eine stark schematische Querschnittsansicht der Drosseleinrichtung des Stoßdämpfers nach Fig. 3;
- Fig. 5: eine weitere stark schematische Querschnittsansicht einer anderen Drosseleinrichtung;
- Fig. 6: einen möglichen Verlauf der Feldstärke über der Zeit;
- Fig. 7: die Kennlinie eines Ventils mit einem Übergangsabschnitt;
- Fig. 8: eine weitere Elektronikeinheit für den Stoßdämpfer nach Fig. 3; und
- Fig. 9: noch eine andere Elektronikeinheit für den Stoßdämpfer nach Fig. 3.

Mit Bezug auf die beiliegenden Figuren wird im Folgenden ein Ausführungsbeispiel eines mit Stoßdämpfern 100 ausgerüsteten Fahrrads 200 erläutert.

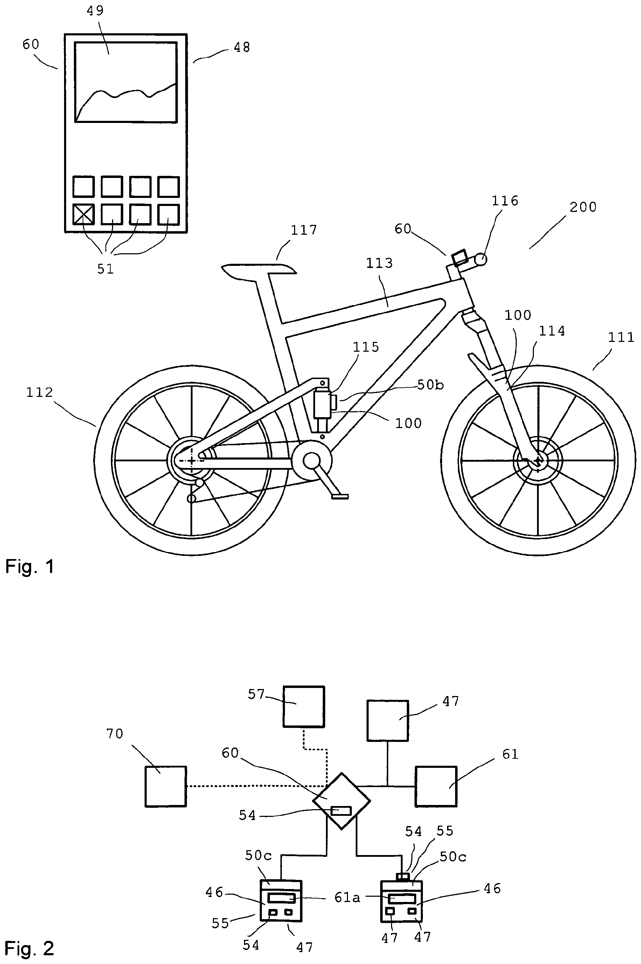

Fig. 1 zeigt eine schematische Darstellung eines Fahrrades 200, welches als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über Scheibenbremsen verfügen. Eine Gangschaltung dient zur Wahl des Übersetzungsverhältnisses. Weiterhin weist das Fahrrad 200 einen Lenker 116 und einen Sattel 117 auf.

Das Vorderrad 111 verfügt über einen als Federgabel 114 ausgeführten Stoßdämpfer 100 und an dem Hinterrad ist ein als Hinterraddämpfer 115 ausgeführter Stoßdämpfer 100 vorgesehen. Eine zentrale Steuereinrichtung 60 ist hier an dem Lenker 116 vorgesehen.

Die zentrale Steuereinrichtung 60 kann auch als Fahrwerksteuerung eingesetzt werden und sowohl die Federgabel 114 als auch den Hinterradstoßdämpfer 115 synchron steuern. Die Steuerung der Stoßdämpfer 100 und weiterer Fahrradkomponenten kann in Abhängigkeit verschiedenster Parameter und auch anhand von sensorischen Daten erfolgen. Gegebenenfalls können auch die Feder- und/oder Dämpfungseigenschaften der Sattelstütze eingestellt werden.

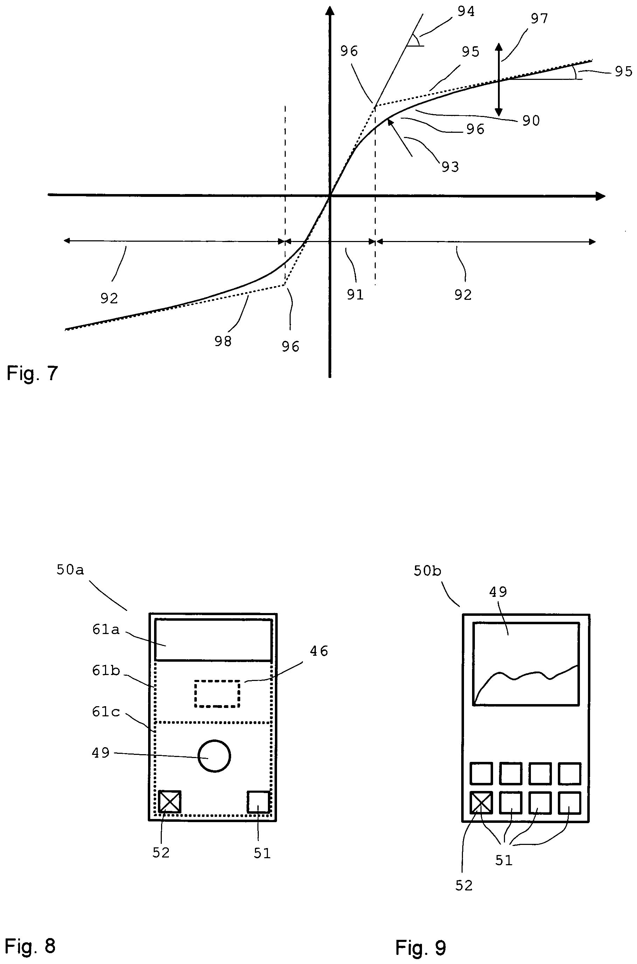

Zusätzlich weist jeder Stoßdämpfer 100 wenigstens eine Steuereinrichtung 46 an einer austauschbar vorgesehenen Elektronikeinheit 50c auf. Anstelle der Elektronikeinheit 50c könnte auch eine Elektronikeinheit 50a oder eine Elektronikeinheit 50b vorgesehen sein (vgl. die Figuren 8 und 9). Die verschiedenen Elektronikeinheiten 50a bis 50c können wenigstens eine Batterieeinheit 61a bis 61c umfassen. Die Batterieeinheiten 61a bis 61c können zusammen mit der jeweiligen Elektronikeinheit oder separat gewechselt werden. Beispielsweise können wiederaufladbare Batterieeinheiten vorgesehen sein, die zusammen mit der Elektronikeinheit 50a bis 50c dem Stoßdämpfer mit einem Handgriff entnommen werden können, um die Elektronikeinheit wieder aufzuladen. Möglich und bevorzugt ist es auch, dass handelsübliche Batterien eingesetzt werden. Vorzugsweise können auch Brennstoffzellen oder dergleichen eingesetzt werden. Bei Fahrrädern mit Elektrounterstützung kann die Energieversorgung auch durch die zentrale Batterieeinheit erfolgen. Möglich ist auch die Unterstützung oder der Betrieb durch einen Dynamo oder dergleichen.

Die Elektronikeinheit 50c ist für fortgeschrittene Benutzer vorgesehen und steht im Datenaustausch mit der zentralen Steuereinrichtung 60. In den Fig. 8 und 9 sind die Elektronikeinheiten 50a und 50b schematisch dargestellt.

Die Elektronikeinheit 50c kann hier jederzeit durch eine andere Elektronikeinheit 50a ersetzt werden (vgl. Fig. 8), die autark mit der integrierten Steuereinrichtung 46 arbeitet. Dann ist keine zentrale Steuereinrichtung 60 vorgesehen bzw. dient diese als reiner Fahrradcomputer.

Möglich ist es auch, dass die Steuereinrichtung 46 oder eine Steuereinheit in dem Stoßdämpfer integriert ist, wobei die Steuereinheit die grundlegenden Funktionen zur Verfügung stellt. Die Bedienung erfolgt dann über die Elektronikeinheit 50a, 50b oder 50c der über die zentrale Steuereinrichtung 60.

Über die Steuereinrichtung 60 oder über die lokal vorgesehenen Steuereinrichtungen 46 kann eine weitgehende Steuerung der Fahreigenschaften des Fahrrades 200 folgen. Dabei ist ein Einsatz an rein muskelbetriebenen Fahrrädern, aber auch der Einsatz an Zwei- und/oder Mehrrädern und insbesondere an Fahrrädern mit Elektrounterstützung möglich und bevorzugt. Mit der Steuereinrichtung 60 und/oder den Steuereinrichtungen 46 können in Abhängigkeit von dem aktuell eingestellten Fahrprofil und von den sonstigen Daten, die den Steuereinrichtungen zur Verfügung gestellt werden, die Dämpfungseigenschaften der Federgabel 114 und des Hinterradstoßdämpfers 115 eingestellt werden.

Die zentrale Steuereinrichtung 60 wird über eine Bedieneinrichtung 48 bedient. Es ist möglich, dass die Steuereinrichtung 60 eine Anzeigeeinrichtung 49 und/oder mehrere Bedienknöpfe 51 und 52 aufweist. Möglich ist es auch, dass die Steuereinrichtung berührungsempfindlich oder näherungssensitiv ausgeführt ist, sodass eine Bedienung durch Berührung entsprechender Schaltflächen oder dergleichen möglich ist.

Die Steuereinrichtung 60 kann dann auch als Fahrradcomputer dienen und Informationen über die aktuelle Geschwindigkeit, sowie über die Durchschnittsgeschwindigkeit und/oder die Tages-, Tour-, Runden- und Gesamtkilometer anzeigen. Möglich ist auch die Anzeige der aktuellen Position, der momentanen Höhe oder der gefahrenen Strecke sowie des Streckenprofils.

Fig. 2 zeigt eine schematische Darstellung der Kommunikationsverbindungen der beteiligten Komponenten. Die zentrale Steuereinrichtung 60 kann drahtgebunden oder drahtlos mit den einzelnen Komponenten verbunden sein. Die gepunktet dargestellte Verbindung mit dem Internet 70 ist eine drahtlose Verbindung. Die Steuereinrichtung 60 kann mit der Batterieeinheit 61a verbunden sein oder eine eigene Energieversorgung aufweisen. Weiterhin kann die Steuereinrichtung 60 mit einem Sensor 47 oder mehreren Sensoren 47 verbunden sein. Die grafische Bedieneinheit 57 bzw. Anzeigeeinheit kann auch drahtlos mit der Steuereinheit 60 verbunden sein. Drahtlos oder drahtgebunden kann der Stoßdämpfer 100 der Federgabel 114 oder der Stoßdämpfer 100 des Hinterraddämpfers 115 angeschlossen sein. Die Verbindung erfolgt über eine Netzwerkschnittstelle 54, die als Funknetzschnittstellen 55 oder als Kabelanschluss 56 ausgeführt sein können.

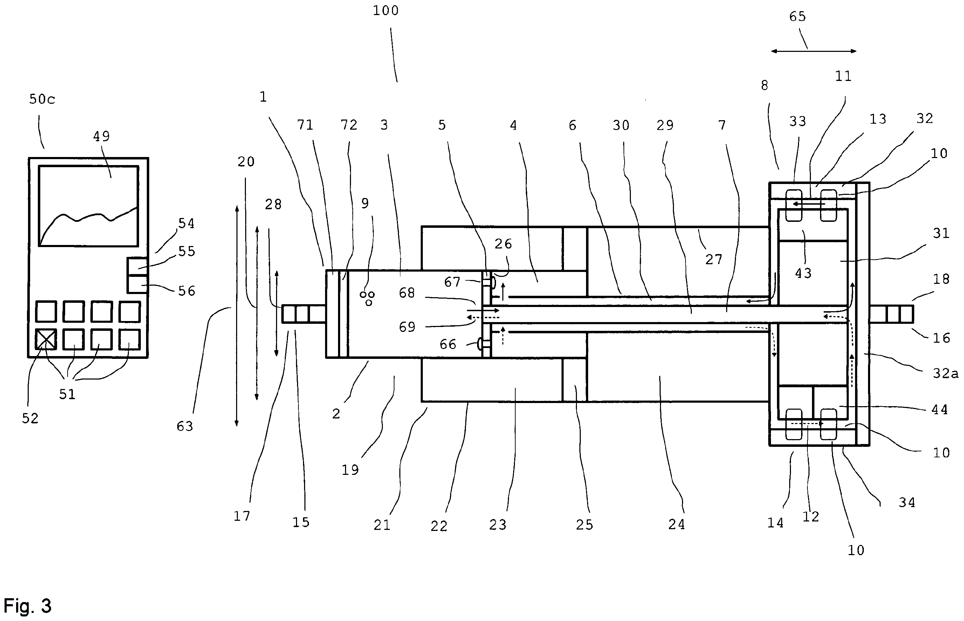

Fig. 3 zeigt in einer stark schematischen Ansicht einen Stoßdämpfer 100, der hier beispielsweise in dem Hinterraddämpfer 115 Anwendung findet.

Der Stoßdämpfer 100 weist ein erstes Ende 15 und ein zweites Ende 16 auf. Der Stoßdämpfer 100 verfügt über eine Dämpfereinrichtung 1 in einem Dämpfergehäuse 2 und über eine Federeinrichtung 21 in einem Federgehäuse 22. Die Dämpfereinrichtung 1 ist näher an dem ersten Ende 15 angeordnet und die Federeinrichtung 21 ist näher an dem zweiten Ende 16 angeordnet. An dem ersten Ende ist ein erster Krafteinleitungsabschnitt bzw. Anschluss 17 und an dem zweiten Ende 16 ist ein zweiter Krafteinleitungsabschnitt bzw. Anschluss 18 vorgesehen.

Innerhalb des Dämpfergehäuses 2 sind die erste Dämpferkammer 3 und die zweite Dämpferkammer 4 angeordnet, die durch einen Dämpferkolben 5 voneinander getrennt sind.

Die erste und die zweite Federkammer 23, 24 sind durch einen Federungskolben 25 getrennt, der mit dem Dämpfergehäuse 2 verbunden ist. Die erste Federkammer 23 ist radial außerhalb des Dämpfergehäuses 2 vorgesehen. Das Dämpfergehäuse 2 taucht bei der Federbewegung in die Federeinrichtung 21 ein.

Die Außenseite 19 des Dämpfergehäuses 2 dient als Lauffläche für das Federgehäuse 22 und begrenzt die erste Federkammer 23 radial nach innen. Zwischen der ersten Federkammer 23 und dem Dämpfergehäuse 2 ist eine Dichtung vorgesehen, die sich auf der Außenseite 19 des Dämpfergehäuses 2 abstützt. Der Federungskolben 25 gleitet auf der Innenseite 27 des Federgehäuses 22.

Beim Einfedern des Stoßdämpfers 100 vergrößern sich das Volumen der zweiten Dämpferkammer 4 und auch das Volumen der ersten Federkammer 23. Beim Ausfedern vergrößern sich das Volumen der ersten Dämpferkammer 3 und auch das Volumen der zweiten Federkammer 24.

Der Dämpferkolben 5 wird von einer Kolbenstange 6 gehalten, die sich von dem Dämpferkolben 5 aus durch die zweite Dämpferkammer 4 aus dem Dämpfergehäuse 2 hinaus und durch die angrenzende zweite Federkammer 24 der Federeinrichtung 21 hindurch erstreckt. Der Dämpferkolben 5 weist eine Dichtung 26 gegenüber dem Dämpfergehäuse 2 auf, die über im Kolben integrierte Magnete eine Dichtung durch das magnetorheologische Fluid bewirken.

Die Kolbenstange 6 ist hier im Ausführungsbeispiel doppelwandig ausgeführt und weist einen radial inneren Durchflusskanal 29 und einen radial äußeren Durchflusskanal 30 auf, die beide Teil eines Strömungskanals 7 sind. Der Strömungskanal 7 verbindet die erste Dämpferkammer 3 mit der zweiten Dämpferkammer 4, wobei das von der ersten Dämpferkammer 3 in die zweite Dämpferkammer 4 übertretende Fluid zunächst durch die Kolbenstange 6 aus dem Dämpfergehäuse 2 nach außen zu der Drosseleinrichtung 8 geleitet wird, von der es durch den äußeren Strömungskanal 29 der Kolbenstange 6 zu der zweiten Dämpferkammer 4 geleitet wird. Zur Verringerung des Strömungswiderstandes kann der Durchmesser der Kolbenstange gegenüber herkömmlichen Stoßdämpfern vergrößert werden, um einen größeren maximalen Strömungsquerschnitt zur Verfügung zu stellen. Dabei wird das Fluid 9 innerhalb der Kolbenstange 6 durch die zweite Federkammer 24 hindurch zu der Drosseleinrichtung 8 und wieder zurück geleitet. An der Drosseleinrichtung 8 ist ein Drosselventil 45 ausgebildet. Das Drosselventil 45 ist elektrisch einstellbar und weist wenigstens zwei Felderzeugungseinrichtungen 13 und 14 auf, die hier als Magnetfelderzeugungseinrichtungen ausgeführt sind.

Die durchgezogen eingezeichneten Pfeile 68 zeigen die Strömungsrichtung des Fluids 9 in der Druckstufe und die gestrichelten Pfeile 69 die Strömungsrichtung des Fluids 9 in der Zugstufe.

Jede Felderzeugungseinrichtung 13 oder 14 kann eine, zwei oder mehr Felderzeugungseinheiten 33, 34 umfassen, die beispielsweise als Spulen 38, 39 mit entsprechenden Kernen 40 und 41 ausgeführt sind, um bei Anlage eines elektrischen Stroms ein entsprechendes Magnetfeld 10 auszubilden. Jede Felderzeugungseinheit 33, 34 ist als Magneteinrichtung 31 ausgebildet, um in dem Dämpfungskanal ein Magnetfeld zu erzeugen.

In der Drosseleinrichtung 8 ist wenigstens ein Dämpfungskanal 11, 12 vorgesehen, um das durchtretende magnetorheologische Fluid 9 gezielt beeinflussen zu können. Die Dämpfungskanäle 11, 12 können parallel zur Längsachse des Stoßdämpfers 100 ausgerichtet sein und sich über einen wesentlichen Teil oder sogar vollständig über einen Umfang der Drosseleinrichtung 8 erstrecken.

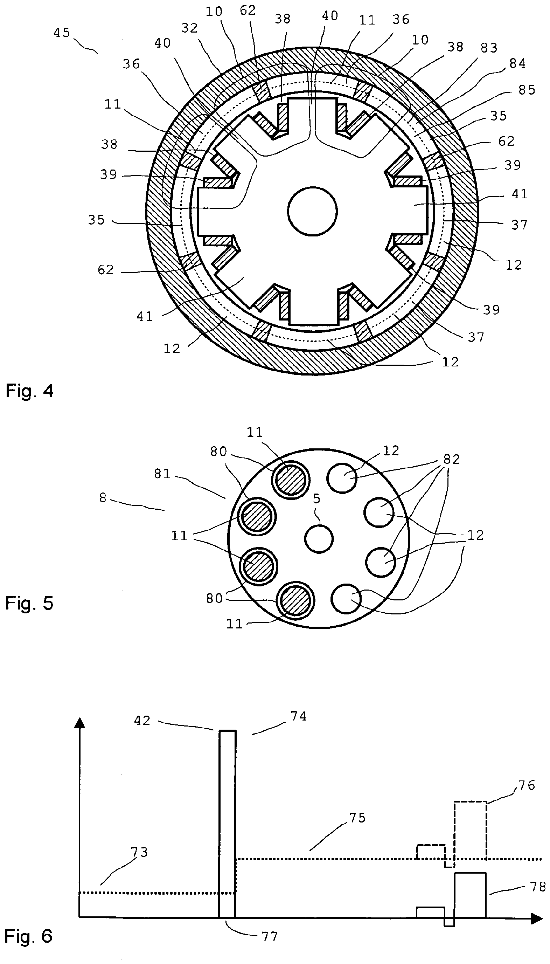

Fig. 4 zeigt einen Querschnitt durch die Drosseleinrichtung des Stoßdämpfers 100 nach Fig. 3.

Vorzugsweise ist ein radial äußerer magnetischer Ringleiter 32 vorgesehen, der radial nach außen den Dämpfungskanal 11 oder die Dämpfungskanäle 11 und 12 begrenzt. Radial nach innen schließen sich die Felderzeugungseinheiten 33 und 34 etc. an. Bei den Felderzeugungseinheiten 33 und 34 ist ein zentraler etwa zahnradförmiger oder sternförmiger Körper mit radialen Vorsprüngen, Zähnen oder Kernen 40, 41 vorgesehen, die jeweils mit einer Spule 38 oder 39 umwickelt sind.

Möglich ist es auch, dass die Felderzeugungseinheiten 33 und 34 etc. radial außen vorgesehen sind, während ein magnetischer Ringleiter oder mehrere Ringleitersegmente radial weiter innen vorgesehen sind.

Jede einzelne der hier insgesamt acht unterschiedlichen Spulen 38, 39 kann separat ansteuerbar sein, um so entsprechende Dämpfungskanäle 11, 12 etc. bzw. Anteile des gesamten Dämpfungskanals mit unterschiedlichen Feldstärken beaufschlagen zu können.

In gewissen Umfangsabständen sind Trennelemente 62 vorgesehen, die als magnetische Isolatoren wirken und weiterhin für eine definierte und zentrierte Halterung der Felderzeugungseinheiten 33, 34 in dem Ringleiter 32 sorgen.

Dadurch sich die Dämpfungskanäle 11, 12 ringförmig um die Kolbenstange 6 herum erstrecken und dadurch, dass der radiale Abstand der Dämpfungskanäle 11, 12 bzw. der Durchmesser 63 größer ist als der Innendurchmesser 28 der zweiten Dämpfungskammer, kann die axiale Länge 65 der Dämpfungskanäle erheblich reduziert werden. Hier ist der radiale Abstand der Dämpfungskanäle 11, 12 bzw. der Durchmesser 63 auch größer als der Durchmesser 20 der Federeinrichtung 21 (vgl. Fig. 3). Die maximal in den Dämpfungskanälen 11, 12 auftretenden Strömungsgeschwindigkeiten sind aufgrund der insgesamt größeren Querschnittsfläche der Dämpfungskanäle 11, 12 gering. Würden die Dämpfungskanäle hingegen beispielsweise in dem Dämpferkolben 5 vorgesehen, so wären bei gleicher Höhe und Länge des Dämpfungskanals durch den erheblich reduzierten Durchmesser 28 des Dämpferkolbens bedingt die Strömungsgeschwindigkeiten in den Dämpfungskanälen größer. Dann müsste der Dämpferkolben 5 eine entsprechend größere axiale Länge aufweisen, was zu einem erhöhten Bauraum führen würde bzw. den Hub reduzieren würde.

Durch gezielte Steuerung einzelner Spulen 38, 39 mittels der Steuerungseinrichtung 46 können die Dämpfungskanäle 11, 12 unterschiedlich starken Feldern ausgesetzt werden, wodurch über der gesamten Querschnittsfläche unterschiedliche Dämpfungsabschnitte entstehen. Beispielsweise kann ein Durchlassabschnitt 37 an einem Dämpfungskanal entstehen, wenn die benachbarten Spulen 39 stromlos geschaltet werden, sodass dort kein Magnetfeld oder nur ein geringes Magnetfeld wirkt. In diesem Fall wirkt der Durchlassabschnitt 37 als Bypass. Werden auf beiden Seiten des Dämpfungskanals die Spulen 38 mit maximaler Stromstärke beaufschlagt, so bildet sich ein Sperrabschnitt 36 aus, der praktisch kein magnetorheologisches Fluid 9 durchlässt.

Der gesamte Dämpfungskanal 11, 12 kann so im dargestellten Beispiel in 8 Abschnitte eingeteilt werden, die entsprechend dem Strom in den zugehörigen Felderzeugungseinheiten 33, 34 unterschiedliche Eigenschaften haben. Ein Übergangsabschnitt 35 kann gebildet werden, wenn in einem oder mehreren Abschnitten zwischen Sperrabschnitt 36 und Durchlassabschnitt 37 ein Magnetfeld 10 mit einer Feldstärke anliegt, welches zwischen jenem des Sperrabschnitts 36 und dem Feld des Durchlassabschnitts 37 liegt.

Durch geschicktes Anordnen und Magnetisieren der Kerne 40, 41 und durch magnetische Streufelder können auch inhomogene Bereiche innerhalb eines Segments des Dämpfungskanals 11, 12 erzielt werden.

Zusätzlich zu dem Drosselventil 45 können weitere Ventile 66 und 67 beispielsweise im Dämpferkolben 5 vorgesehen sein, wie in Fig. 3 dargestellt. Solche Ventile 66 und 67 werden vorzugsweise als Einwegventile ausgebildet und können mit einer Feder in ihre Schließstellung vorbelastet ausgeführt sein. Bevorzugt ist der Einsatz von Shims, die kraftabhängig einen entsprechenden Durchfluss ermöglichen. Die Ventile können z.B. auch als Blow-Off-Ventile Schutz vor Überlast bieten.

Durch den Einsatz solcher Ventile 66, 67 oder eines der beiden Ventile 66, 67 kann beispielsweise ermöglicht werden, dass nur in der Druckstufe beim Einfedern das elektronische Drosselventil 45 aktiv ist, während beispielsweise für die Zugstufe das Ventil 66 fest eingestellt ist und den direkten Übertritt durch den Dämpferkolben 5 ermöglicht. Umgekehrt ist es auch möglich, dass das mechanische Ventil 67 in der Druckstufe arbeitet, während der Durchfluss in der Zugstufe durch die Drosseleinrichtung 8 erfolgt.

Die Steuerungseinrichtung 46 ist in der austauschbar vorgesehenen Elektronikeinheit 50c vorgesehen. Für Anfänger kann auch eine Elektronikeinheit 50a angebracht werden, die nur wenige oder sogar gar keine Einstellmöglichkeiten bietet, um den Benutzer nicht zu überfordern.

Wenn ein Benutzer entsprechende Erfahrungen gesammelt hat, kann er die Elektronikeinheit 50a gegen eine Elektronikeinheit 50b oder 50c austauschen oder entsprechend aufrüsten lassen, sodass dem Benutzer mehr Einstellmöglichkeiten und Funktionen zur Verfügung stehen.

So kann beispielsweise eine Datenspeicherung vorhanden sein, die Tourendaten aufnimmt und speichert. Gegebenenfalls können auch zuvor in der Steuereinrichtung oder auf einem Computer oder im Internet gespeicherte Daten geladen werden, um für eine geplante Tour optimale Einstellungen zu erhalten.

Der Stoßdämpfer 100 kann über Dauermagnete 43, 44 verfügen, deren jeweilige Magnetfeldstärke im Betrieb durch entsprechende magnetische Impulse der Spulen 38, 39 dauerhaft veränderbar ist.

Fig. 5 zeigt einen stark schematischen Querschnitt durch eine andere Drosseleinrichtung 8 bzw. ein Drosselventil 45 für einen Stoßdämpfer nach Fig. 3, wobei insgesamt 8 Dämpfungskanäle 11, 12 vorgesehen sind. Hier sind zwei Gruppen bzw. Kanalgruppen 81 und 82 vorgesehen, wobei hier jeweils vier Dämpfungskanäle 11 die Kanalgruppe 81 und jeweils vier Dämpfungskanäle 12 die Kanalgruppe 82 bilden. Bei der Kanalgruppe 81 sind in einer Strömungsrichtung hier als Shim-Ventile 80 ausgebildete Einwegventile vorgesehen, die z.B. Fluid nur in der Druckstufe durchlassen. Das bedeutet dann, dass alle insgesamt acht Dämpfungskanäle 11 und 12 der Kanalgruppen 81 und 82 in der Druckstufe aktiv sind, während in der Zugstufe die vier Dämpfungskanäle der Kanalgruppe 81 durch die jeweiligen Shim-Ventile 80 blockiert sind. Dadurch ergeben sich schon mechanisch unterschiedliche Dämpferkennlinien für die Druckstufe und die Zugstufe, sodass weniger elektrische Energie zur Erzielung der gewünschten Kennlinie eingesetzt werden muss. Auch eine umgekehrte Realisierung ist möglich, bei der in der Druckstufe die vier Dämpfungskanäle der Kanalgruppe 81 durch die jeweiligen Shim-Ventile 80 blockiert sind, während in der Zugstufe alle Dämpfungskanäle aktiv sind. Solche Shim-Ventile erlauben eine einfache mechanische Begrenzung des maximalen Strömungsquerschnittes in einer Fließrichtung.

Solche Zusatzventile können sich im Bereich des Dämpfungskanals oder an einer anderen Stelle des Dämpfers wie beispielsweise dem Strömungskanal oder dem Dämpfungskolben befinden. Abhängig von der Anwendung können verschiedenste Zusatzventile wie beispielsweise von der Strömungsrichtung und/oder dem Druck abhängige Shim-Ventile, von der Temperatur oder sonstigen Parametern abhängige Ventile oder auch steuerbare elektromechanische Ventile eingesetzt werden. Diese Zusatzventile können den Durchfluss durch zumindest einen Teil mindestens eines Dämpfungskanals blockieren, freigeben bzw. den Strömungswiderstand erhöhen oder einen Bypass zum Dämpfungskanal bilden.

Weiterhin kann quer zum Magnetfeld wenigstens eine Zwischenwand bzw. Trennwand 83 vorgesehen sein, die wenigstens einen Dämpfungskanal in Richtung der Feldlinien in zwei Teilkanäle 84, 85 segmentiert. Die Zwischenwand 83 besteht dabei aus einem magnetischen Leiter. So kann die für eine bestimmte Verkettung der magnetorheologischen Partikel benötigte Feldstärke gesenkt werden, sodass der Energiebedarf der Spule sehr gering sein kann.

Fig. 6 zeigt die Funktionsweise bei der Veränderung oder Einstellung einer gewünschten Magnetfeldstärke von einer ersten Magnetfeldstärke 73 auf eine zweite Magnetfeldstärke 75. Dargestellt ist die Stärke des Magnetfeldes über der Zeit. Die Feldstärke des Dauermagneten 43, 44 ist gepunktet dargestellt, während das von der elektrischen Spule 38 während des Impulses 42 erzeugte magnetische Feld 74 durchgezogen eingezeichnet ist.

Klar erkennbar ist, dass die von der elektrischen Spule 38 erzeugte Magnetfeldstärke 74 über den größten Teil der Zeit Null ist, da ein von der elektrischen Spule 38 erzeugtes Magnetfeld nicht für den normalen Betrieb nötig ist und somit dort keine elektrische Energie benötigt wird.

Ein von der elektrischen Spule 38 erzeugtes Magnetfeld 74 wird nur benötigt, wenn eine Veränderung der Magnetfeldstärke 73, 75 des Dauermagneten 43 angestrebt wird.

So liegt die von dem Dauermagneten 43 erzeugte magnetische Feldstärke 73 zunächst bei einem geringeren Wert, bis ein magnetischer Impuls 42 durch die elektrische Spule 38 ausgelöst wird. Die von der elektrischen Spule 38 erzeugte Magnetfeldstärke 74 weist eine derartige Stärke auf, dass der Dauermagnet 43, 44 dauerhaft mit einer entsprechenden Stärke magnetisiert wird.

Beispielsweise kann die magnetische Feldstärke des Dauermagneten 43, 44 von einer zunächst geringeren Feldstärke 73 auf eine entsprechend höhere Feldstärke 75 erhöht werden, um eine stärkere Dämpfung zu bewirken bzw. um das Dämpfungsventil 45 zu schließen.

Während die Impulsdauer 77 für den magnetischen Impuls 42 nur sehr kurz ist und im Bereich von einigen Millisekunden liegen kann, weist der Dauermagnet 43, 44 anschließend dauerhaft die hohe magnetische Feldstärke 75 auf, die bei einer entsprechenden Magnetfeldstärke 74 des magnetischen Impulses 42 auch bis in die Sättigung des verwendeten hartmagnetischen Materials reichen kann. Die von der Spule 38 während des magnetischen Impulses 42 erzeugte Magnetfeldstärke 74 bewirkt eine dauerhafte Änderung der magnetischen Feldstärke des Magneten 43 von zunächst einer magnetische Feldstärke 73 zu einer magnetischen Feldstärke 75.

Aus Fig. 6 ist ersichtlich, dass die Energieeinsparung gegenüber einem herkömmlichen System, das dauernd Strom benötigt, von der Häufigkeit der Ummagnetisierungen abhängt. Doch auch bei häufigem Ummagnetisieren, beispielsweise im Sekundentakt, kann der Energiebedarf kleiner als bei einem vergleichbaren System ohne Remanenz sein. Wird die Ummagnetisierung nur bei Bedarf betätigt, also beispielsweise bei einem Wechsel der Fahrbahnbeschaffenheit, tritt der Vorteil gegenüber anderen Systemen noch erheblich deutlicher zu Tage.

Bei einer entsprechend geringeren Magnetisierung des Dauermagneten 43, 44 wird ein entsprechend geringes magnetisches Feld erzeugt. Eine Entmagnetisierung kann durch ein schwächer werdendes magnetisches Wechselfeld erzeugt werden.

Weiterhin zeigt Fig. 6 im rechten Teil des Diagramms schematisch noch eine Situation, bei der die Spule 38 auch zur zeitlichen Modifikation des wirksamen Magnetfeldes verwendet wird. Wird die Spule 38 nur mit einem geringen und z.B. zeitlich variablen Strom 78 beaufschlagt, welches in Fig. 8 im rechten Teil durchgezogen eingezeichnet ist, so wird das insgesamt wirksame Magnetfeld 76 dementsprechend beeinflusst und je nach Polarisation verstärkt oder geschwächt. Damit ist auch eine dynamische Beeinflussung des wirkenden magnetischen Feldes 76 möglich, ohne die dauerhafte Magnetisierung des Dauermagneten 43 (Feldstärke 75) zu ändern.

Analog können die anderen Spulen 38, 39 zur Beeinflussung der anderen Kerne 40, 41 eingesetzt werden. Die Beeinflussung kann synchron erfolgen. Es kann zur Erzeugung unterschiedlicher Abschnitte, wie beispielsweise eines Übergangs- oder Bypassabschnittes auch eine unterschiedliche Steuerung einzelner Spulen 38, 39 erfolgen.

Fig. 7 zeigt eine Dämpferkennlinie 90 des Stoßdämpfers 1 in einem Kraft-Geschwindigkeitsdiagramm des Dämpferkolbens. Der Low-Speed-Bereich 91 und der High-Speed-Bereich 92 sind über eine sanfte Abrundung mit einem Radius 93 verbunden. Die Kennlinie ist hier symmetrisch aufgebaut und zeigt den gleichen Verlauf für die Zug- und Druckstufe. Ein unterschiedlicher Verlauf der beiden Stufen ist aber grundsätzlich möglich und erwünscht.

Bei dem Stoßdämpfer 100 wird die Steigung 94 der Dämpferkennlinie im Low-Speed-Bereich 91 im Wesentlichen durch den Bypass-Abschnitt 37 bestimmt. Im High-Speed-Bereich 92 wird die Steigung 95 wesentlich durch den Gesamtquerschnitt der Dämpfungskanäle 11, 12 und durch die Stärke des Feldes im Sperrabschnitt 36 bestimmt.

Ein Übergangsabschnitt 35 mit einem über seiner Ausdehnung schwächer werdenden Magnetfeld führt zu einer vorteilhaften und nicht-linearen Ausprägung und zu der Abrundung, die zu einer angenehmen und sicheren Betriebsweise führt.

Eingezeichnet ist weiterhin ein Pfeil 97, der die Auswirkung eines unterschiedlich starken Magnetfeldes anzeigt. Mit einem stärkeren Magnetfeld verschiebt sich die Kennlinie nach oben, während sie sich bei einem schwächeren Magnetfeld nach unten verschiebt.

Punktiert eingezeichnet ist eine Dämpferkennlinie 98, die sich ergibt, wenn zwar ein Durchlassabschnitt 37 aber kein Übergangsabschnitt 35 vorliegt.

Die Steigung im Low-Speed-Bereich 94 ist durch den Anteil des Bypass- oder Durchlassabschnitts 37 einstellbar. Je größer der Durchlassabschnitt 37, desto kleiner die Steigung. Auch der Nulldurchgang wird durch den Durchlassabschnitt 37 erzeugt, da jederzeit Dämpfungsfluid durch den Durchlassabschnitt 37 unbeeinflusst fließen kann, sodass schon bei kleinen Kräften eine entsprechende Dämpferkolbenbewegung ausgelöst wird.

Die Steigung im High-Speed-Bereich 95 wird durch die Form des gesamten Strömungskanals und der Dämpfungskanäle 11 und 12 und die eingestellte Stärke des magnetischen Feldes 75 im Wirkabschnitt bzw. Sperrabschnitt 36 beeinflusst.

Der für den Komfort und die Sicherheit wichtige Bereich mit der Abrundung wird durch den Übergangsabschnitt 35 des Dämpfungskanals 11 bzw. 12 abgerundet, sodass eine ergonomische und sichere Betriebsweise ermöglicht wird. Die Größe des abgerundeten Bereichs ergibt sich aus der Größe und Gestalt des Übergangsabschnitts 35, der durch eine entsprechende Einstellung der Stärke der Magnetfelder der Felderzeugungseinrichtungen 13, 14 flexibel einstellbar ist.

Die Stromversorgung kann auch durch einen Generator, Dynamo oder insbesondere auch einen Nabendynamo unterstützt werden.

In den Figuren 8 und 9 sind zwei weitere Elektronikeinheiten 50a und 50b schematisch dargestellt. Die einfach aufgebaute Elektronikeinheit 50a aus Fig. 8 ist für Anfänger mit Grundkenntnissen vorgesehen und weist 2 Bedienknöpfe 51 und 52 und eine Anzeige 49 in Form einer Leuchtdiode auf. Einer der Bedienknöpfe 51, 52 kann zur Erhöhung der Dämpfung und der andere zur Verringerung der Dämpfung vorgesehen sein.

Beispielhaft sind in Fig. 8 drei unterschiedliche Batterieeinheiten 61a, 61b und 61c eingezeichnet, die wahlweise an der Elektronikeinheit 50a bis 50c angebracht werden können. Eine kleinere und leichtere Variante 61a eignet sich für Rennen oder kurze Touren, während für längere Touren sich die größeren und schwereren Batterieeinheiten 61b und 61c mit größerer Kapazität besser eignen.

Die Elektronikeinheit 50b aus Fig. 9 kann weitgehend mit der Elektronikeinheit 50c aus Fig. 3 übereinstimmen und eine Vielzahl von Einstellmöglichkeiten bieten. Bei dieser Variante erfolgt die Steuerung durch die integrierte Steuereinrichtung 46 autark. Datenverbindungen zu einer zentralen Steuereinrichtung können während der Fahrt nicht aufgebaut werden.

In jeder Variante der Elektronikeinheiten 50a, 50b oder 50c ist ein vollautomatischer Betrieb möglich. Die Art und der Umfang der Einstellmöglichkeiten können sich jedoch stark unterscheiden. Eine Plausibilitätsprüfung ist für alle Bedienmöglichkeiten vorzugsweise vorgesehen, um unvorteilhafte, schädliche oder gefährliche Einstellungen verhindern zu können.

In einer weiteren Variante erfolgt die Steuerung der Stoßdämpfer über ein zentrales Steuergerät. Wenn beispielsweise eine Gruppe von Radfahrern bei einer geführten Tour oder im Training unterwegs ist, kann durch den Führer oder Trainer zentral für alle Fahrer die Steuerung vorgenommen werden. Auch eine Steuerung anhand zuvor abgelegter Daten ist möglich. In diesen Fällen hat jeder Fahrer auch bei unbekannten Strecken optimale Einstellungen. In einem solchen Betriebsmodus können Bedieneingaben ignoriert werden, sodass ein rein vollautomatischer Betrieb erfolgt.

Es ist in allen Fällen bevorzugt, dass eine dritte Federkammer zuschaltbar vorgesehen ist, um die Federhärte zu variieren.

**Bezugszeichenliste:**

| | | | |
|---|---|---|---|
| 1 | Dämpfereinrichtung | 51, 52 | Bedienknopf |
| 2 | Dämpfergehäuse | 54 | Netzwerkschnittstelle |
| 3 | erste Dämpferkammer | 55 | Funknetzschnittstelle |
| 4 | zweite Dämpferkammer | 56 | Kabelanschluss |
| 5 | Dämpferkolben | 57 | grafische Bedieneinheit |
| 6 | Kolbenstange | 60 | Steuerungseinrichtung |
| 7 | Strömungskanal | 61a-c | Batterieeinheit |
| 8 | Drosseleinrichtung | 62 | Trennelement |
| 9 | Fluid | 63 | Durchmesser |
| 10 | Feld | 65 | axiale Länge |
| 11, 12 | Dämpfungskanal | 66, 67 | Ventil |
| 13, 14 | Felderzeugungseinrichtung | 68, 69 | Pfeil |
| | | 70 | Internet |
| 15 | erstes Ende | 71 | Ausgleichsraum |
| 16 | zweites Ende | 72 | Ausgleichskolben |
| 17 | erster Anschluss | 73-76 | Feldstärke |
| 18 | zweiter Anschluss | 77 | Zeitdauer |
| 19 | Außenseite | 78 | Stromstärke |
| 20 | Durchmesser | 80 | Shim-Ventil |
| 21 | Federeinrichtung | 81, 82 | Kanalgruppe |
| 22 | Federgehäuse | 83 | Trennwand |
| 23 | erste Federkammer | 84, 85 | Teilkanal |
| 24 | zweite Federkammer | 90 | Dämpferkennlinie |
| 25 | Federungskolben | 91 | Low-Speed-Bereich |
| 26 | Dichtung | 92 | High-Speed-Bereich |
| 27 | Innenseite | 93 | Radius |
| 28 | Durchmesser | 94, 95 | Steigung |
| 29, 30 | Durchflusskanal | 96 | Knickpunkt |
| 31 | Magneteinrichtung | 97 | Pfeil |
| 32 | Ringleiter | 98 | Dämpferkennlinie |
| 33, 34 | Felderzeugungseinheit | 100 | Stoßdämpfer |
| 35 | Übergangsabschnitt | 111 | Vorderrad |
| 36 | Sperrabschnitt | 112 | Hinterrad |
| 37 | Durchlassabschnitt | 113 | Rahmen |
| 38, 39 | Spule | 114 | Federgabel |
| 40, 41 | Kern | 115 | Hinterraddämpfer |
| 42 | Impuls | 116 | Lenker |
| 43, 44 | Dauermagnet | 117 | Sattel |
| 45 | Drosselventil | 200 | Fahrrad |
| 46 | Steuereinrichtung | | |
| 47 | Sensor | | |
| 48 | Bedieneinrichtung | | |
| 49 | Anzeige | | |
| 50a-c | Elektronikeinheit | | |

## Patentansprüche

1. Stoßdämpfer (100) für ein wenigstens teilweise muskelbetriebenes Fahrzeug und insbesondere ein Fahrrad (200) mit wenigstens einer Dämpfereinrichtung (1), die ein Dämpfergehäuse (2) umfasst und in welchem eine erste und eine zweite Dämpferkammer (3, 4) über wenigstens einen Dämpferkolben (5) voneinander getrennt sind,
wobei eine mit dem Dämpferkolben (5) verbundene Kolbenstange (6) sich von dem Dämpferkolben (5) aus wenigstens durch die zweite Dämpferkammer (4) hindurch aus dem Dämpfergehäuse (2) hinaus erstreckt,
wobei die erste Dämpferkammer (3) mit der zweiten Dämpferkammer (4) über wenigstens einen Strömungskanal (7) in Verbindung steht, der durch die Kolbenstange (6) aus dem Dämpfergehäuse (2) heraus zu wenigstens einer Drosseleinrichtung (8) führt, wobei der Strömungskanal (7) an der Drosseleinrichtung (8) wenigstens einen mit einem feldempfindlichen rheologischen Fluid (9) versehenen Dämpfungskanal (11, 12) umfasst, der mit wenigstens einer an der Drosseleinrichtung (8) angeordneten Felderzeugungseinrichtung (13, 14) einem Feld (10) vorbestimmter Stärke aussetzbar ist, um einen Durchfluss des feldempfindlichen rheologischen Fluids (9) durch die Drosseleinrichtung (8) zu beeinflussen,
**dadurch gekennzeichnet,**
**dass** ein maximaler Strömungsquerschnitt in der Druckstufe und ein maximaler Strömungsquerschnitt in der Zugstufe unterschiedlich sind.

2. Stoßdämpfer (100) nach Anspruch 1, wobei wenigstens eine Federeinrichtung (21) vorgesehen ist, die eine erste und wenigstens eine zweite mit einem kompressiblen Medium versehene Federkammer (23, 24) umfasst und wobei insbesondere das Dämpfergehäuse (2) bei einer Einfederung in die Federeinrichtung (21) eintaucht, wozu insbesondere wenigstens die erste Federkammer (23) wenigstens die zweite Dämpferkammer (4) wenigstens im eingefederten Zustand wenigstens teilweise radial umgibt und wobei vorzugsweise die Drosseleinrichtung (8) in mindestens einer Relativposition des Dämpferkolbens (5) zu den Dämpferkammern (3, 4) außerhalb des Dämpfergehäuses (2) liegt.

3. Stoßdämpfer (100) nach einem der vorhergehenden Ansprüche, wobei die Drosseleinrichtung (8) mehrere über dem Umfang verteilt angeordnete Dämpfungskanäle (11, 12) aufweist, wobei insbesondere an der Drosseleinrichtung (8) wenigstens ein Strömungskanal (7) über wenigstens ein Trennelement (62) in wenigstens zwei Dämpfungskanäle (11, 12) aufgeteilt ist, wobei insbesondere wenigstens ein Trennelement (62) als separates Teil ausgebildet ist.

4. Stoßdämpfer (100) nach einem der vorhergehenden Ansprüche, wobei eine Länge der Dämpfungskanäle (11, 12) quer zur Strömungsrichtung größer ist als ein Umfang des Dämpferkolbens (5).

5. Stoßdämpfer (100) nach einem der vorhergehenden Ansprüche, wobei wenigstens ein Dämpfungskanal (11, 12) einem sich in radialer Richtung erstreckenden Feld der Felderzeugungseinrichtung (13, 14) aussetzbar ist.

6. Stoßdämpfer (100) nach einem der vorhergehenden Ansprüche, wobei wenigstens ein Dämpfungskanal (11, 12) einem sich in axialer Richtung erstreckenden Feld der Felderzeugungseinrichtung (13, 14) aussetzbar ist.

7. Stoßdämpfer (100) nach einem der vorhergehenden Ansprüche, wobei die Kolbenstange (6) wenigstens zwei Durchflusskanäle (29, 30) aufweist und insbesondere doppelwandig ausgeführt ist.

8. Stoßdämpfer (100) nach einem der vorhergehenden Ansprüche, wobei der maximale Strömungsquerschnitt in der Druckstufe und/oder in der Zugstufe über wenigstens ein mechanisches Einwegventil begrenzt wird.

9. Stoßdämpfer (100) nach einem der vorhergehenden Ansprüche, wobei wenigstens ein Dämpfungskanal mit einem Shim-Ventil versehen ist und/oder wobei wenigstens ein Strömungsventil (31, 32) in dem Dämpferkolben (5) vorgesehen ist und insbesondere als Einwegventil ausgebildet ist.

10. Stoßdämpfer (100) nach einem der vorhergehenden Ansprüche, wobei die Felderzeugungseinrichtung (13, 14) wenigstens eine und insbesondere wenigstens zwei Felderzeugungseinheiten (33, 34) umfasst und wobei insbesondere wenigstens zwei Dämpfungskanäle (11 12) unterschiedlich starken Feldern verschiedener Felderzeugungseinheiten 33, 34) aussetzbar sind.

11. Stoßdämpfer (100) nach einem der vorhergehenden Ansprüche, wobei wenigstens ein Dämpfungskanal (11, 12) einem inhomogenen Feld aussetzbar ist und wobei insbesondere der Strömungsquerschnitt des wenigstens einen Dämpfungskanals (11, 12) wenigstens einen Übergangsabschnitt (35) und wenigstens einen Sperrabschnitt (36) und/oder wenigstens einen Durchlassabschnitt (37) umfasst und wobei insbesondere wenigstens ein Anteil des Übergangsabschnitts (35) und/oder des Durchlass-Abschnitts (37) an der Querschnittsfläche des Strömungskanals (11, 12) einstellbar ist.

12. Stoßdämpfer (100) nach einem der vorhergehenden Ansprüche, wobei wenigstens eine Felderzeugungseinrichtung (13, 14) als Magneteinrichtung (31) ausgebildet ist und wobei insbesondere die Magneteinrichtung (31) wenigstens einen Permanentmagneten (38) zur Erzeugung eines statischen Magnetfeldes umfasst.

13. Stoßdämpfer (100) nach einem der vorhergehenden Ansprüche, wobei die Felderzeugungseinrichtung (13, 14) wenigstens einen magnetisch leitenden Ringleiter (32) umfasst und wobei insbesondere der magnetisch leitende Ringleiter (32) den wenigstens einen Dämpfungskanal (11, 12) in radialer Umrichtung umgibt.

14. Stoßdämpfer (100) nach mindestens einem der vorhergehenden Ansprüche, wobei wenigstens eine Felderzeugungseinheit (33, 34) wenigstens eine Spule (38, 39) umfasst und/oder wobei wenigstens eine Felderzeugungseinheit (33, 34) einen Dauermagneten (43, 44), umfasst, dessen Magnetisierung durch wenigstens einen magnetischen Impuls (42) der Spule (38, 39) dauerhaft einstellbar ist.

15. Stoßdämpfer (100) nach einem der vorhergehenden Ansprüche, wobei das Dämpfergehäuse (2) und/oder das Federgehäuse (22) aus einem unmagnetischen Material wie einer Leichtmetalllegierung oder einem Faserverbundwerkstoff besteht.

## Claims

1. Shock absorber (100) for an at least partially muscle-powered vehicle and in particular a bicycle (200) having at least one damper device (1) comprising a damper housing (2) and in which a first and a second damper chamber (3, 4) are separated from one another via at least one damper piston (5),
wherein a piston rod (6) connected with the damper piston (5) extends from the damper piston (5) at least through the second damper chamber (4) out of the damper housing (2),
wherein the first damper chamber (3) is in connection with the second damper chamber (4) via at least one flow duct (7) which runs through the piston rod (6) out of the damper housing (2) to at least one throttling device (8), the flow duct (7) comprising at the throttling device (8) at least one damping duct (11, 12) provided with a field-sensitive rheological fluid (9) which by means of at least one field generating device (13, 14) disposed at the throttling device (8) can be exposed to a field (10) of a predetermined strength to influence a flow of the field-sensitive rheological fluid (9) through the throttling device (8), **characterized in**
**that** a maximum flow cross-section in the compression stage and a maximum flow cross-section in the rebound stage are different.

2. The shock absorber (100) according to claim 1 wherein at least one spring device (21) is provided comprising a first and at least one second spring chamber (23, 24) provided with a compressible medium and wherein in particular the damper housing (2) dives into the spring device (21) in compressing to which end in particular at least the first spring chamber (23) radially surrounds at least the second damper chamber (4) at least in part at least in the compressed state and wherein preferably the throttling device (8) lies external of the damper housing (2) in at least one relative position of the damper piston (5) relative to the damper chambers (3, 4).

3. The shock absorber (100) according to any of the preceding claims wherein the throttling device (8) comprises multiple damping ducts (11, 12) disposed distributed about the periphery wherein in particular at the throttling device (8) at least one flow duct (7) is subdivided into at least two damping ducts (11, 12) via at least one separator (62) wherein in particular at least one separator (62) is configured as a separate part.

4. The shock absorber (100) according to any of the preceding claims wherein a length of the damping ducts (11, 12) transverse to the flow direction is larger than a periphery of the damper piston (5).

5. The shock absorber (100) according to any of the preceding claims wherein at least one damping duct (11, 12) can be exposed to a field of the field generating device (13, 14) extending in the radial direction.

6. The shock absorber (100) according to any of the preceding claims wherein at least one damping duct (11, 12) can be exposed to a field of the field generating device (13, 14) extending in the axial direction.

7. The shock absorber (100) according to any of the preceding claims wherein the piston rod (6) comprises at least two flow ducts (29, 30) and is in particular configured double-walled.

8. The shock absorber (100) according to any of the preceding claims wherein the maximum flow cross-section in the compression stage and/or in the rebound stage is defined via at least one mechanical one-way valve.

9. The shock absorber (100) according to any of the preceding claims wherein at least one damping duct is provided with a shim valve and/or wherein at least one flow valve (31, 32) is provided in the damper piston (5) and is in particular configured as a one-way valve.

10. The shock absorber (100) according to any of the preceding claims wherein the field generating device (13, 14) comprises at least one and in particular at least two field generating units (33, 34) and wherein in particular at least two damping ducts (11, 12) can be exposed to fields of different strengths of different field generating units (33, 34).

11. The shock absorber (100) according to any of the preceding claims wherein at least one damping duct (11, 12) can be exposed to an inhomogeneous field and wherein in particular the flow cross-section of the at least one damping duct (11, 12) comprises at least one transition section (35) and at least one blocking section (36) and/or at least one bypass section (37) and wherein in particular at least a portion of the transition section (35) and/or of the bypass section (37) is adjustable at the cross-sectional area of the flow duct (11, 12).

12. The shock absorber (100) according to any of the preceding claims wherein at least one field generating device (13, 14) is configured as a magnetic device (31) and wherein in particular the magnetic device (31) comprises at least one permanent magnet (38) for generating a static magnetic field.

13. The shock absorber (100) according to any of the preceding claims wherein the field generating device (13, 14) comprises at least one magnetically conductive ring conductor (32) and wherein in particular the magnetically conductive ring conductor (32) surrounds the at least one damping duct (11, 12) in the radial direction.

14. The shock absorber (100) according to at least one of the preceding claims wherein at least one field generating unit (33, 34) comprises at least one coil (38, 39) and/or wherein at least one field generating unit (33, 34) comprises a permanent magnet (43, 44) whose magnetization can be set permanently by means of at least one magnetic pulse (42) of the coil (38, 39).

15. The shock absorber (100) according to any of the preceding claims wherein the damper housing (2) and/or the spring housing (22) consist/s of a non-magnetic material such as a light metal alloy or a fibrous composite material.

## Revendications

1. Absorbeur de choc (100) pour un véhicule entraîné au moins partiellement par force musculaire, et notamment pour une bicyclette (200), doté d'au moins un moyen d'amortissement (1) qui comprend un boîtier d'amortisseur (2) et dans lequel une première et une deuxième chambre d'amortisseur (3, 4) sont séparées l'une de l'autre par au moins un piston d'amortisseur (5),
une des tiges de piston (6) reliée au piston d'amortisseur (5) passant, à partir dudit piston d'amortisseur (5), au moins à travers la deuxième chambre d'amortisseur (4) pour ressortir par le boîtier d'amortisseur (2),
la première chambre d'amortisseur (3) se trouvant reliée à la deuxième chambre d'amortisseur (4) au moins par un canal de flux (7) qui conduit à un dispositif d'étranglement (8) en passant par la tige de piston (6) et en sortant du boîtier d'amortisseur (2), le canal de flux (7) passant par le dispositif d'étranglement (8), le canal de flux (7) au niveau du dispositif d'étranglement (8) comprenant au moins un canal d'amortissement (11, 12) pourvu d'un fluide (9) rhéologique sensible au champ, lequel fluide peut, avec au moins un dispositif de génération de champ (13, 14) agencé au niveau du dispositif d'étranglement (8), être exposé à un champ (10) d'une intensité prédéterminée pour influencer un débit du fluide (9) rhéologique sensible au champ via le dispositif d'étranglement (8),
**caractérisé en ce**
**qu'**une section droite de flux maximale en action de compression et une section droite de flux maximale en action d'extension sont différentes.

2. Absorbeur de choc (100) selon la revendication 1, au moins un moyen de suspension (21) étant prévu, lequel comprend une première et au moins une deuxième chambre de suspension (23, 24) pourvue d'un milieu compressible, et notamment le boîtier d'amortisseur (2) plongeant dans le moyen de suspension (21) au moment d'un débattement, notamment ainsi au moins la première chambre de suspension (23) entourant au moins partiellement de manière radiale au moins la deuxième chambre d'amortisseur (4) au moins à l'état de débattement, et de préférence le moyen d'étranglement (8) étant en dehors du boîtier d'amortisseur (2) dans au moins une position relative du piston d'amortisseur (5) par rapport aux chambres d'amortisseur (3, 4).

3. Absorbeur de choc (100) selon l'une quelconque des revendications précédentes, le dispositif d'étranglement (8) présentant plusieurs canaux d'amortissement (11, 12) agencés répartis sur la circonférence, notamment au niveau du dispositif d'étranglement (8) au moins un canal de flux (7) étant divisé via au moins un élément de séparation (62) en au moins deux canaux d'amortissement (11, 12), notamment au moins un élément de séparation (62) étant conçu comme pièce séparée.

4. Absorbeur de choc (100) selon l'une quelconque des revendications précédentes, une longueur des canaux d'amortissement (11, 12) à la transversale de la direction du flux étant supérieure à une circonférence du piston d'amortisseur (5).

5. Absorbeur de choc (100) selon l'une quelconque des revendications précédentes, au moins un canal d'amortissement (11, 12) pouvant être exposé à un champ du dispositif de génération de champ (13, 14) qui s'étend dans la direction radiale.

6. Absorbeur de choc (100) selon l'une quelconque des revendications précédentes, au moins un canal d'amortissement (11, 12) pouvant être exposé à un champ du dispositif de génération de champ (13, 14) qui s'étend dans la direction axiale.

7. Absorbeur de choc (100) selon l'une quelconque des revendications précédentes, la tige de piston (6) présentant au moins deux canaux de débit (29, 30) et étant réalisée notamment à double paroi.

8. Absorbeur de choc (100) selon l'une quelconque des revendications précédentes, la section droite de flux maximale étant limitée en action de compression et/ou en action d'extension via au moins une vanne anti-retour mécanique.

9. Absorbeur de choc (100) selon l'une quelconque des revendications précédentes, au moins un canal d'amortissement étant pourvu d'une soupape à plaquette de réglage et/ou au moins une vanne de régulation de débit (31, 32) étant prévue dans le piston d'amortisseur (5) et étant notamment conçue comme vanne anti-retour.

10. Absorbeur de choc (100) selon l'une quelconque des revendications précédentes, le dispositif de génération de champ (13, 14) comprenant au moins une et notamment au moins deux unités de génération de champ (33, 34), et notamment au moins deux canaux d'amortissement (11, 12) pouvant être exposés à des champs d'intensités différentes de plusieurs unités de génération de champ (33, 34) différentes.

11. Absorbeur de choc (100) selon l'une quelconque des revendications précédentes, au moins un canal d'amortissement (11, 12) pouvant être exposé à un champ inhomogène et notamment la section droite de flux dudit au moins un canal d'amortissement (11, 12) comprenant au moins un tronçon de transition (35) et au moins un tronçon de barrage (37), et notamment au moins une portion du tronçon de transition (35) et/ou du tronçon de passage (37) pouvant être réglées à la surface de section du canal de flux (11, 12).

12. Absorbeur de choc (100) selon l'une quelconque des revendications précédentes, au moins un dispositif de génération de champ (13, 14) étant conçu comme dispositif magnétique (31) et notamment ledit dispositif magnétique (31) comprenant au moins un aimant permanent (38) destiné à générer un champ magnétique statique.

13. Absorbeur de choc (100) selon l'une quelconque des revendications précédentes, le dispositif de génération de champ (13, 14) comprenant au moins un conducteur annulaire (32) magnéto-conducteur, et notamment ledit conducteur annulaire (32) magnéto-conducteur entourant ledit au moins un canal d'amortissement (11, 12) dans le sens de la circonférence radiale.

14. Absorbeur de choc (100) selon au moins l'une quelconque des revendications précédentes, au moins une unité de génération de champ (33, 34) comprenant au moins une bobine (38, 39) et/ou au moins une unité de génération de champ (33, 34) comprenant un aimant permanent (43, 44) dont l'aimantation peut être réglée de manière durable par au moins une impulsion magnétique (42) de la bobine (38, 39).

15. Absorbeur de choc (100) selon l'une quelconque des revendications précédentes, le boîtier d'amortisseur (2) et/ou le boîtier de suspension (22) étant composés d'un matériau non magnétique tel qu'un alliage de métaux légers ou un matériau composite à fibres.
